(19) Europäisches Patentamt / European Patent Office / Office européen des brevets

(11) EP 4 200 373 B1

(12) # EUROPEAN PATENT SPECIFICATION

(45) Date of publication and mention of the grant of the patent: **07.01.2026 Bulletin 2026/02**

(21) Application number: **21765686.7**

(22) Date of filing: **20.08.2021**

(51) International Patent Classification (IPC):
***C09J 7/50*** *(2018.01)* ***C08J 5/18*** *(2006.01)*
***C08J 7/043*** *(2020.01)* ***C08F 265/04*** *(2006.01)*
***B32B 27/08*** *(2006.01)* ***B32B 27/36*** *(2006.01)*
***C08J 7/04*** *(2020.01)*

(52) Cooperative Patent Classification (CPC):
**C08J 7/043; B32B 27/08; B32B 27/36; C08J 7/042; C09J 7/50;** B32B 2250/02; B32B 2250/244; B32B 2255/10; B32B 2255/26; B32B 2255/28; B32B 2307/31; B32B 2307/518; B32B 2307/724; B32B 2307/748; B32B 2439/70; (Cont.)

(86) International application number: **PCT/GB2021/052173**

(87) International publication number: **WO 2022/038377 (24.02.2022 Gazette 2022/08)**

(54) **BREATHABLE COMPOSITE POLYMERIC FILMS**

ATMUNGSAKTIVE VERBUNDPOLYMERFOLIEN

FILMS POLYMÈRES COMPOSITES RESPIRANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.08.2020 GB 202013061**

(43) Date of publication of application: **28.06.2023 Bulletin 2023/26**

(73) Proprietor: **Mylar Specialty Films U.S. Limited Partnership**
**Chester, VA 23836 (US)**

(72) Inventors:
- **TURNER, David**
  **Redcar, Cleveland TS10 4RF (GB)**
- **HOBAUGH, John**
  **Chester, Virginia 23836 (US)**
- **MEABURN, Megan**
  **Redcar, Cleveland TS10 4RF (GB)**
- **FRANZYSHEN, Stephen**
  **Chester, Virginia 23836 (US)**
- **JONES, Stephen**
  **Redcar, Cleveland TS10 4RF (GB)**
- **SANKEY, Stephen**
  **Redcar, Cleveland TS10 4RF (GB)**

(74) Representative: **Carpmaels & Ransford LLP**
**One Southampton Row**
**London WC1B 5HA (GB)**

(56) References cited:
**WO-A1-01/38448** **WO-A1-2008/053205**
**WO-A1-2009/123921** **WO-A1-2009/127842**
**WO-A1-2019/207314** **US-A- 4 476 189**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)
C08J 2367/02; C08J 2467/02; C09J 2301/304;
C09J 2301/414; C09J 2481/003

## Description

This invention relates to breathable composite polymeric films, and processes for the production thereof. The film is particularly suitable for use as a breathable, sealable and peelable film for packaging applications.

Plastic film has long been used in the packaging of fresh-cut flowers and fresh produce, such as vegetables and fruits. The primary function of such packaging film is to provide a protective seal against insects, bacteria and air-borne contaminants.

Nevertheless, fresh-cut flowers, vegetables and fruits have a limited shelf life due to fundamental changes in their biochemistry. Whilst in soil, photosynthesis allows the plant to grow and expire oxygen. However, after harvesting, the plant no longer converts sunlight and carbon dioxide into carbohydrates and oxygen, but uses its stores of carbohydrate to excrete water and carbon dioxide. For plants that are wrapped in plastic packaging, the accumulation of trapped water in the packaging leads to fungal growths and rotting of the fresh food. A study of volatiles produced by fruits and vegetables has been made by P.M.A. Toivonen ("Non-ethylene, non-respiratory volatiles in harvested fruits and vegetables; their occurrence, biological activity and control", Postharvest Biology and Technology 12 (1997) 109-125). Plastic packaging film, particularly polyolefin film, acts as a water barrier and can actually make this situation worse by trapping excreted water within the package. Vegetables and fruits having a high moisture content, such as broccoli, mushrooms and avocados, are particularly susceptible. It would be desirable to provide packaging which not only provides a barrier to insects, bacteria and air-borne contaminants but which is also breathable to water (in other words, a film which would allow water to freely pass out of the packaging), thereby increasing the shelf life of the contents by delaying the onset of microbial and fungal growth. Indeed, increasing the shelf life of the contents is important from the perspective of the consumer, in order to reduce food waste.

There exist a number of commercially available breathable films, such as polyolefin films, which have been voided using inorganic fillers thereby allowing easier passage of water. However, such films are not normally transparent and therefore have a disadvantage from a marketing standpoint. Other films may be based on thermoplastic elastomers (TPEs), which provide excellent breathability but are expensive for packaging applications.

Another approach to the manufacture of breathable packaging has been to perforate the film in order to allow egress of excreted gas. The number of perforations per unit area and the perforation diameter may be adjusted depending on the goods to be packaged and the respiration rate thereof. The disadvantage of this approach is that the perforations expose the packaged goods to insects, bacteria and air-borne contaminants. Optionally heat-sealable composite films comprising a perforated layer are disclosed in WO-01/92000-A, GB-2355956-A, EP-0358461-A; EP-0178218-A; US-2002/0187694-A; JP-A-06/219465-A; JP-06/165636-A; JP-54/117582-A; and PCT/GB2004/003119.

WO-2006/075151-A1 describes breathable, heat-sealable composite films comprising a first layer of polymeric material comprising a copolyester comprising monomeric units derived from one or more diol(s), one or more dicarboxylic acid(s), and one or more poly(alkylene oxide)glycol(s); and a heat-sealable polymeric second layer.

WO-2008/053205-A1 relates to a heat-sealable, coextruded composite polymeric film comprising a substrate layer comprising a first copolyester material having on a surface thereof a heat-sealable layer comprising a second copolyester material wherein: (i) the first and second copolyester materials are different from each other; (ii) the copolyester of the substrate layer comprises an aromatic dicarboxylic acid and a saturated aliphatic dicarboxylic acid of formula $C_nH_{2n}(COOH)_2$ wherein n is 2 to 8; (iii) the heat-sealable layer comprises one or more wax(es); and (iv) the composite film is shrinkable or thermoformable; and the use thereof as a packaging film, particularly as, or in the manufacture of, a lidding film for heat-sealing to a receptacle containing a food product.

US4476189 A relates to a primer coated, oriented polyester film material wherein the primer is applied in an aqueous medium comprising a water dispersible copolyester consisting essentially of the condensation product of components A, B, C, and D or their polyester forming equivalents as follows: (A) about 60 to 75 mole percent of terephthalic acid; (B) about 15 to 25 mole percent of at least one dicarboxylic acid of the formula $HOOC(CH_2)_nCOOH$, wherein n ranges from about 1-11; (C) greater than from about 6 up to about 15 mole percent of at least one sulfomonomer containing an alkali metal sulfonate group attached to a dicarboxylic aromatic nucleus, and (D) stoichiometric quantities, i.e., about 100 mole percent of at least one aliphatic or cycloaliphatic alkylene glycol copolymerizable therewith having about from 2 to 11 carbon atoms.

WO-2009/123921-A1 relates to an optical article including a multilayer optical film and a primer layer disposed on the multilayer optical film.

WO-2009/127842-A1 relates to a composite film comprising a polymeric substrate and a planarising coating layer wherein the surface of the planarised substrate exhibits an $R_a$ value of less than 0.7 run and/or an $R_q$ value of less than 0.9 nm, and wherein the composite film further comprises a gas-permeation barrier deposited by atomic layer deposition on a planarised surface of the substrate.

WO-01/38448-A1 relates to a water-based composition which is said to be suitable for use on polyester-based substrates for increasing adhesion to overcoat.

WO-2019/207314-A1 relates to a polyester film comprising a polymeric phosphonate flame retardant in an

amount of from about 1.0 to about 25.0 wt% by total weight of the film and further comprising at least one metal cation selected from the group consisting of Group I and Group II metal cations.

Breathable films may make up all or substantially all of the breathable packaging. For example, the film may be heat-sealed to itself to form a sealed bag. Alternatively, breathable films may comprise only part of the total breathable packaging. For example, the breathable film may form a heat-sealed lid on a container in or on which the goods are disposed. Such containers require lids which not only securely seal the container, in order to prevent leakage and drying out of the packaged contents, and to provide a protective barrier against insects, bacteria and air-borne contaminants during storage, but which are also able to be readily peeled from the container on opening. The term "container" as used herein refers to any receptacle or tray suitable for disposing the goods to be packaged. A film which forms a lid on such a container is referred to herein as a "lidding film".

There remains a need to improve the sealability of breathable films to themselves and/or to containers. Therefore, it is an object of the present invention to provide a breathable composite film with improved sealability to itself and/or with improved sealability to containers. Furthermore, it would be desirable to improve the adhesion bond strength between the layers within the breathable composite film in order to reduce delamination and cohesive strength failure.

There remains a particular need to provide a breathable film which exhibits excellent sealability and peelability to containers and which exhibits a "clean peel". As used herein, the term "clean peel" means that there is no or substantially no residue of the heat-sealable layer visible between the lidding film and the surface of the container during peeling of the lidding film therefrom. Preferably, there is also no or substantially no residue of the heat-sealable layer visible on the surface of the container after peeling the lidding film therefrom. A clean peel is important from the perspective of the consumer, in order to avoid the impression that the contents of the container might be contaminated by the sealant material.

Moreover, there remains a particular need to provide a breathable film which exhibits excellent sealability and peelability characteristics and which is also optically clear, since optical clarity is perceived as a marker of quality, freshness and hygiene in respect of the product and the packaged goods.

It is therefore an object of this invention to provide a breathable, heat-sealable packaging film which allows egress of moisture and excreted gas, particularly moisture, from the packaged product whilst also providing a physical barrier to insects, bacteria and airborne contaminants, and which exhibits excellent sealability and peelability to containers, particularly wherein the film is optically clear.

According to a **first** aspect of the present invention, there is provided a breathable, heat-sealable, composite film comprising substrate layer (A), a primer coating layer (B) disposed on the substrate layer, and a heat-sealable coating layer (C) disposed on the primer coating layer, wherein

(i) substrate layer (A) is a multilayer film comprising base layer ($A_1$) and polymeric layer ($A_2$), wherein base layer ($A_1$) and polymeric layer ($A_2$) independently comprise a polyester comprising monomeric units derived from one or more diol(s), one or more dicarboxylic acid(s) and one or more poly(alkylene oxide) glycol(s);
(ii) primer coating layer (B) comprises a cross-linked sulfopolyester;
(iii) heat-sealable coating layer (C) comprises a first copolyester.

As used herein, the term "breathable" means that the composite film of the present invention is gas-permeable, particularly to water vapour and preferably also to oxygen.

Preferably, the composite film has a water vapour transmission rate (WVTR) of at least 80 g/m$^2$/day, preferably at least 90 g/m$^2$/day, preferably at least 100 g/m$^2$/day, preferably at least 115 g/m$^2$/day, preferably at least 130 g/m$^2$/day, preferably at least 140 g/m$^2$/day, and more preferably at least 150 g/m$^2$/day. The WVTR may be adjusted by variation of the film composition described herein depending on the goods to be packaged and the respiration rate thereof.

The heat-sealable coating layer (C) of the composite film is the layer which faces the packaged goods, i.e. layer (C) faces the interior of the container when the film is used as a lidding film as described herein. The substrate layer (A) of the composite film is the layer which is outermost and faces away from the packaged goods, i.e. which faces away from the interior of the container when the film is used as a lidding film.

In a preferred embodiment, the method by which the composite film is made comprises a coating process. Thus, the heat-sealable coating layer (C) and the primer coating layer (B) are preferably disposed by a coating technique, rather than by a lamination technique.

The substrate layer (A) is a self-supporting film or sheet by which is meant a film or sheet capable of independent existence in the absence of a supporting base. The composite film is preferably uniaxially or biaxially oriented, preferably biaxially oriented.

The polyester of the substrate layer (A) is suitably a linear polyester. The polyester of the substrate layer (A) is a thermoplastic crystallisable polyester.

The polyester of the substrate layer (A) comprises monomeric units derived from one diol and one dicarboxylic

acid. The polyester is preferably a copolyester and is derived from three or more types of comonomers. Accordingly, the polyester of the substrate layer (A) is preferably a copolyester comprising monomeric units derived from a first diol, a first dicarboxylic acid and at least one additional comonomer. The additional comonomer may be one or more diol(s), one or more dicarboxylic acid(s) and/or one or more poly(alkylene oxide)glycol(s).

The copolyester of the substrate layer (A) comprises and preferably consists of monomeric units derived from one or more diol(s); one or more dicarboxylic acid(s); and one or more poly(alkylene oxide)glycol(s).

Suitable dicarboxylic acids for the polyester of the substrate layer (A) include aromatic acids such as terephthalic acid, isophthalic acid, phthalic acid and 2,5-, 2,6- or 2,7-naphthalene dicarboxylic acid, as well as aliphatic dicarboxylic acids such as succinic acid, sebacic acid, adipic acid and azelaic acid. Cycloaliphatic dicarboxylic acids may also be used. Other suitable dicarboxylic acids include 4,4'-diphenyldicarboxylic acid and hexahydroterephthalic acid. Sulfonated aromatic dicarboxylic acids in which a sulfonate group is attached to the aromatic nucleus may also be used, and preferably the sulfonate group of such a sulfomonomer is a sulfonic acid salt, preferably a sulfonic acid salt of a Group I or Group II metal, preferably lithium, sodium or potassium, more preferably sodium. Ammonium salts may also be used. The sulfonated aromatic dicarboxylic acid may be selected from any suitable aromatic dicarboxylic acid, e.g. terephthalic acid, isophthalic acid, phthalic acid, 2,5-, 2,6- or 2,7-naphthalenedicarboxylic acid, and is preferably isophthalic acid. Preferred sulfomonomers are 5-sodium sulfo-isophthalic acid and 4-sodium sulfo-isophthalic acid. The term "dicarboxylic acids" as used herein includes acid equivalents of dicarboxylic acids having two functional carboxyl groups which perform substantially like dicarboxylic acids in reaction with glycols and diols in forming polyesters, including esters and ester-forming derivatives, such as acid halides and anhydrides. The dicarboxylic acids preferably have a low molecular weight (i.e. a molecular weight of less than about 300, which refers to the molecular weight of the acid and not to its equivalent ester or ester-forming derivative).

The polyester of the substrate layer (A) preferably comprises monomeric units derived from at least one aromatic acid, particularly terephthalic or naphthalene dicarboxylic acids, and particularly terephthalic acid.

In a preferred embodiment, the dicarboxylic acid fraction of the polyester contains monomeric units derived from only one dicarboxylic acid.

In an alternative embodiment, the dicarboxylic acid fraction of the copolyester contains monomeric units derived from a first aromatic dicarboxylic acid (preferably terephthalic acid) and a second dicarboxylic acid. The second dicarboxylic acid may be selected from aliphatic dicarboxylic acids such as succinic acid, sebacic acid, adipic acid or azelaic acid, and in one embodiment the second dicarboxylic acid is azelaic acid. Alternatively, the second dicarboxylic acid may be selected from a second aromatic dicarboxylic acid such as isophthalic acid. Alternatively, the second carboxylic acid may be selected from sulfonated aromatic dicarboxylic acids such as sodium sulfo-isophthalic acid. In these embodiments, the first dicarboxylic acid is preferably present in an amount of 50 to 100%, (preferably 60 to 99 mol%, preferably 70 to 95 mol%, preferably 80 to 95 mol%, preferably 80 to 90 mol%) of the total acid fraction of the copolyester, and the second dicarboxylic acid is preferably present in an amount of 0 to 50 mol% (preferably 1 to 40 mol%, preferably 5 to 30 mol%, preferably 5 to 20 mol%, preferably 10 to 20 mol%) of the total acid fraction of the copolyester. Where the second dicarboxylic acid is a second aromatic dicarboxylic acid (preferably isophthalic acid), it is preferably present in amounts of 0 to 50% (preferably 5 to 30%, preferably 10 to 25%, preferably 15 to 20%, preferably about 18 mol%) of the total acid fraction of the copolyester. Where the second dicarboxylic acid is a sulfonated aromatic dicarboxylic acid, it is preferably present in amounts of 0 to 15% (preferably 0 to 10%, preferably 1 to 10%, preferably 2 to 6 mol%) of the total acid fraction of the copolyester.

Preferably, the dicarboxylic acid fraction of the polyester of the substrate layer (A) contains monomeric units derived from only one type of non-sulfonated aromatic dicarboxylic acid residue, and in one embodiment from only one type of aromatic dicarboxylic residue. In one embodiment, at least 90 mol%, preferably at least 95 mol%, preferably at least 98mol%, and preferably at least 99 mol% of the dicarboxylic acid fraction of the polyester is made up of one type of non-sulfonated aromatic dicarboxylic acid.

Suitable diols for the polyester of the substrate layer (A) are low molecular weight diols (i.e. having a molecular weight below about 250) including acyclic, alicyclic and aromatic dihydroxy compounds. Preferred compounds are diols with 2-15 carbon atoms such as ethylene, propylene, isobutylene, tetramethylene, 1,4-pentamethylene, 2,2-dimethyltrimethylene, hexamethylene and decamethylene glycols, dihydroxycyclohexane, cyclohexane dimethanol, resorcinol, hydroquinone, 1,5-dihydroxynaphthalene, etc. An aliphatic diol is preferred, especially acyclic aliphatic diols containing 2-8 carbon atoms, preferably ethylene glycol and 1,4-butanediol, more preferably ethylene glycol. Cycloaliphatic (alicylic) glycols such as 1,4-cyclohexanedimethanol (CHDM) can also be used. Equivalent ester-forming derivatives of diols may be used in place of the diol. The term "low molecular weight diols" as used herein encompasses such equivalent ester-forming derivatives; provided that the molecular weight requirement pertains to the diol and not to its derivatives. Preferably, the polyester of the substrate layer (A) comprises monomeric units derived from only one type of low molecular weight diol residue. In one embodiment, at least 90 mol%, preferably at least 95 mol%, preferably at least 98 mol%, and preferably at least 99 mol% of the low molecular weight diol fraction of the polyester is made up of one type of low molecular weight diol. Preferably, the low molecular weight diol fraction present in the polyester is in the range of 50 mol% or more,

preferably 55 mol% or more, preferably in the range of 60 to 90 mol%, and in one embodiment in the range of 60 to 80 mol%, of the total glycol fraction of the polyester.

Suitable poly(alkylene oxide) glycols for the copolyester of the substrate layer (A) are preferably selected from $C_2$ to $C_{15}$, preferably $C_2$ to $C_{10}$, preferably $C_2$ to $C_6$ alkylene chains, and preferably selected from polyethylene glycol (PEG), polypropylene glycol (PPG) and poly(tetramethylene oxide) glycol (PTMO), preferably polyethylene glycol. Ethylene oxide-terminated poly(propylene oxide) segments may also be used. Mixtures of poly(alkylene oxide) glycols can be used, but in a preferred embodiment the copolyester of the substrate layer (A) comprises only one type of poly(alkylene oxide) glycol residue.

The weight average molecular weight ($M_w$) of the poly(alkylene oxide) glycol is preferably at least about 400, preferably at least about 1000, preferably at least about 2000, preferably at least about 3000, and preferably at least about 3200. Preferably the weight average molecular weight of the poly(alkylene oxide) glycol is no more than about 10,000, preferably no more than about 6000, preferably no more than about 4500, preferably no more than about 4000, preferably no more than about 6000. Preferably, the weight average molecular weight of the poly(alkylene oxide) glycol is from about 400 to about 10,000, preferably from about 1000 to about 6000, preferably from about 2000 to about 4500, preferably from about 3000 to about 4000, and preferably from about 3200 to about 3600. Preferably, the weight average molecular weight of the poly(alkylene oxide) glycol is about 3450.

Unless the context clearly indicates otherwise the term molecular weight as used herein refers to weight average molecular weight ($M_w$) which is measured by the method as described herein.

The amount of poly(alkylene oxide) glycol present in the copolyester of the substrate layer (A) is preferably no more than 40 wt%, preferably no more than 30 wt%, preferably no more than 20 wt%, and preferably no more than 15 wt%, relative to the total weight of the copolyester in substrate layer (A). Where present, the amount of poly(alkylene oxide) glycol present in the copolyester of the substrate layer (A) is preferably at least about 5 wt%, preferably at least about 10 wt%, relative to the total weight of the copolyester in substrate layer (A). Preferably, the amount of poly(alkylene oxide) glycol present in the copolyester of the substrate layer (A) is in the range of 5 to 40 wt%, preferably in the range of 5 to 30 wt%, preferably in the range of 10 to 20 wt%, and in one embodiment in the range of 10 to 15 wt%, relative to the total weight of the copolyester in substrate layer (A). Preferably, the amount of poly(alkylene oxide) glycol present in the copolyester of the substrate layer (A) is about 12 wt% relative to the total weight of the copolyester in substrate layer (A).

Preferably, the copolyester of the substrate layer (A) comprises or consists of monomer units derived from poly(alkylene oxide) glycol (preferably PEG), a low molecular weight aliphatic diol (preferably ethylene glycol) and an aromatic dicarboxylic acid (preferably terephthalic acid).

Suitable polyesters for use in the substrate layer (A) of the present invention preferably have a glass transition temperature (Tg) of at least 0°C, preferably at least 15°C, preferably at least 30°C, and are preferably no more than 60°C, preferably no more than 55°C. Thus, in a preferred embodiment, the Tg of the polyesters is in the range of from about 30°C to about 60°C.

The substrate layer (A) preferably comprises greater than 50%, preferably at least 65%, preferably at least 80%, preferably at least 95% and preferably at least 98% of the aforementioned polyester, the stated weights of polyester being the percent by weight relative to the total weight of the substrate layer (A). Preferably the polymeric material in the substrate layer (A) consists essentially of the aforementioned polyester.

The substrate layer (A) is a multilayer film. It is preferably a coextruded film which is comprised of two or more coextruded layers. The substrate layer (A) comprises, or may consist of, base layer ($A_1$) and polymeric layer ($A_2$). Each of the polyesters of base layer ($A_1$) and polymeric layer ($A_2$) independently is a copolyester comprising monomeric units derived from one or more diol(s); one or more dicarboxylic acid(s) and one or more poly(alkylene oxide) glycol(s). Preferably, the polyester of each coextruded layer is different.

The substrate layer (A) is a multilayer film comprising or consisting of base layer ($A_1$) and polymeric layer ($A_2$). Thus, the composite film of the present invention comprises or consists of four layers and has an $A_1A_2BC$-layer structure. Heat-sealable coating layer (C) is disposed on the primer coating layer (B); primer coating layer (B) is disposed on the polymeric layer ($A_2$); and the polymeric layer ($A_2$) is disposed on the base layer ($A_1$). Thus, heat-sealable coating layer (C) is in direct contact with primer coating layer (B); primer coating layer (B) is in direct contact with both the heat-sealable coating layer (C) and the polymeric layer ($A_2$); polymeric layer ($A_2$) is in direct contact with both the primer coating layer (B) and the base layer ($A_1$); and base layer ($A_1$) is in direct contact with polymeric layer ($A_2$).

The description and preferences of the one or more diol(s), the one or more dicarboxylic acid(s) and the one or more poly(alkylene oxide) glycols of substrate layer (A) are equally applicable to the polyesters of each of the base layer ($A_1$) and polymeric layer ($A_2$).

The polyester of the base layer ($A_1$) is a copolyester comprising or consisting of monomer units derived from one or more diol(s); one or more dicarboxylic acid(s) and one or more poly(alkylene oxide) glycol(s).

Preferably, the polyester of the base layer ($A_1$) is a copolyester comprising or consisting of monomer units derived from poly(alkylene oxide) glycol (preferably PEG), a low molecular weight aliphatic diol (preferably ethylene glycol) and an aromatic dicarboxylic acid (preferably terephthalic acid), preferably wherein the weight average molecular weight of the

poly(alkylene oxide) glycol is from about 400 to about 10,000, preferably from about 1000 to about 6000, preferably from about 2000 to about 4500, preferably from about 3000 to about 4000, and preferably from about 3200 to about 3600. Preferably, the weight average molecular weight of the poly(alkylene oxide) glycol is about 3450.

The amount of poly(alkylene oxide) glycol present in the copolyester of the base layer ($A_1$) is preferably no more than 40 wt%, preferably no more than 30 wt%, preferably no more than 20 wt%, and preferably no more than 15 wt%, relative to the total weight of the copolyester in base layer ($A_1$). Preferably, the amount of poly(alkylene oxide) glycol present in the copolyester of the base layer ($A_1$) is preferably at least about 5 wt%, preferably at least about 10 wt%, relative to the total weight of the copolyester in base layer ($A_1$). Preferably, the amount of poly(alkylene oxide) glycol present in the copolyester of the base layer ($A_1$) is in the range of 5 to 40 wt%, preferably in the range of 5 to 30 wt%, preferably in the range of 10 to 20 wt%, and in one embodiment in the range of 10 to 15 wt%, relative to the total weight of the copolyester in base layer ($A_1$). Preferably, the amount of poly(alkylene oxide) glycol present in the copolyester of the base layer ($A_1$) is about 12 wt%, relative to the total weight of the copolyester in base layer ($A_1$).

Preferably, the polyester of the polymeric layer ($A_2$) is a copolyester comprising or consisting of monomer units derived from one or more diol(s); one or more dicarboxylic acid(s) and one or more poly(alkylene oxide) glycol(s).

Particularly suitable poly(alkylene oxide) glycols for the copolyester of the polymeric layer ($A_2$) are preferably selected from $C_2$ to $C_{15}$, preferably $C_2$ to $C_{10}$, preferably $C_2$ to $C_6$ alkylene chains, and preferably selected from polyethylene glycol (PEG), polypropylene glycol (PPG) and poly(tetramethylene oxide) glycol (PTMO), preferably polyethylene glycol. Ethylene oxide-terminated poly(propylene oxide) segments may also be used. Mixtures of poly(alkylene oxide) glycols can be used, but in a preferred embodiment the copolyester of the polymeric layer ($A_2$) comprises only one type of poly(alkylene oxide) glycol residue.

The average molecular weight of the poly(alkylene oxide) glycol in polymeric layer ($A_2$) is preferably at least about 200, preferably at least about 250, preferably at least about 300, and preferably at least about 350. Preferably the average molecular weight of the poly(alkylene oxide) glycol is no more than about 800, preferably no more than about 600, preferably no more than about 500, and preferably no more than about 450. Preferably, the average molecular weight of the poly(alkylene oxide) glycol is from about 200 to about 800, preferably from about 250 to about 600, preferably from about 300 to about 500, preferably from about 350 to about 450. Preferably, the average molecular weight of the poly(alkylene oxide) glycol is about 400.

The amount of poly(alkylene oxide) glycol present in the copolyester of polymeric layer ($A_2$) is preferably no more than 40 wt%, preferably no more than 30 wt%, preferably no more than 20 wt%, and preferably no more than 15 wt%, relative to the total weight of the copolyester in layer ($A_2$). When present, the amount of poly(alkylene oxide) glycol present in the copolyester of the polymeric layer ($A_2$) is preferably at least about 5 wt%, preferably at least about 8 wt% and preferably at least about 10wt% relative to the total weight of the copolyester in layer ($A_2$). Preferably, the amount of poly(alkylene oxide) glycol present in the copolyester of the polymeric layer ($A_2$) is in the range of 5 to 40 wt%, preferably in the range of 5 to 30 wt%, preferably in the range of 8 to 20 wt%, and in one embodiment in the range of 10 to 15 wt%, relative to the total weight of the copolyester in layer ($A_2$).

In a preferred embodiment, polymeric layer ($A_2$) comprises a copolyester derived from an aliphatic glycol (preferably ethylene glycol), a first aromatic dicarboxylic acid (preferably terephthalic acid), a second dicarboxylic acid (preferably isophthalic acid) and a poly(alkylene oxide) glycol (preferably PEG). Thus, a preferred copolyester is derived from ethylene glycol, terephthalic acid, isophthalic acid and PEG.

In this embodiment, the amount of the second dicarboxylic acid (preferably isophthalic acid) is preferably no more than about 40 wt%, preferably no more than 30 wt% and preferably no more than 20 wt% relative to the total weight of the copolyester in layer ($A_2$). Preferably, the amount of the second dicarboxylic acid (preferably isophthalic acid) present in the copolyester of the polymeric layer ($A_2$) is at least about 5 wt%, preferably at least about 10 wt% and preferably at least about 15 wt% relative to the total weight of the copolyester in layer ($A_2$). Preferably, the amount of the second dicarboxylic acid (preferably isophthalic acid) present in the copolyester of the polymeric layer ($A_2$) is in the range of 5 to 40 wt%, preferably in the range of 10 to 30 wt%, and preferably in the range of 15 to 20 wt%, relative to the total weight of the copolyester in layer ($A_2$). Thus, a preferred copolyester is derived from ethylene glycol, terephthalic acid, isophthalic acid in the range of 15 to 20 wt% and PEG in the range of 10 to 15 wt%.

In an alternative preferred embodiment, polymeric layer ($A_2$) comprises a copolyester derived from an aliphatic glycol (preferably ethylene glycol), an aromatic dicarboxylic acid (preferably terephthalic acid), and a poly(alkylene oxide) glycol (preferably PEG). Thus, a preferred copolyester is derived from ethylene glycol, terephthalic acid and PEG. Thus, a preferred copolyester is derived from ethylene glycol, terephthalic acid and PEG in the range of 10 to 15 wt%.

Preferably, each of the base layer ($A_1$) and the polymeric layer ($A_2$) independently comprises greater than 50%, preferably at least 65%, preferably at least 80%, preferably at least 95% and preferably at least 98% of the aforementioned polyester, the stated weights of polyester being the percent by weight relative to the total weight of said layer. Preferably the polymeric material in each of the base layer ($A_1$) and the polymeric layer ($A_2$) consists essentially of the aforementioned polyester.

In each of the aforementioned substrate layer (A), base layer ($A_1$) and polymeric layer ($A_2$), conventional

additives may be present in minor proportion, typically no more than 35%, typically no more than 20%, typically no more than 5%, typically no more than 2% by weight relative to the total weight of the layer. Thus, a layer may further comprise one or more additive(s) conventionally employed in the manufacture of polyester films, such as antioxidants, UV-absorbers, hydrolysis stabilisers, fillers, lubricants, slip aids, anti-blocking agents, flame retardants, gloss improvers, prodegradents, viscosity modifiers and dispersion stabilisers. It will be appreciated that the substrate layer (A), base layer ($A_1$) or polymeric layer ($A_2$) does not contain a cross-linking agent. Said conventional additives may be introduced into the polyester composition in a conventional manner. For example, the additive(s) may be introduced by mixing with the monomeric reactants from which the film-forming polyester composition is derived, or the additive(s) may be mixed with the polyester composition by tumble or dry blending or by compounding in an extruder, followed by cooling and, usually, comminution into granules or chips. Masterbatching technology may also be employed.

Preparation of the polyesters of substrate layer (A) (including base layer ($A_1$) and/or of polymeric layer ($A_2$)) are readily achieved by conventional methods well-known in the art. Thus, the polyester may be made by a first step of direct esterification or trans-esterification, followed by a second step of polycondensation. A conventional ester interchange reaction may be utilised, comprising heating an ester of the dicarboxylic acid, for example the dimethyl ester of terephthalic acid, with the poly(alkylene oxide)glycol (where present) and a molar excess of the diol in the presence of a catalyst at elevated temperature (typically in the range of about 150 to 260°C), followed by distilling off the alcohol (e.g. methanol) formed by the interchange reaction. Typically, the direct esterification route may be used, which comprises heating at least one aromatic acid, for example terephthalic acid, with the poly(alkylene oxide) glycol (where present) and a molar excess of the low molecular weight diol in the presence of a catalyst at elevated temperature (typically in the range of about 150 to 260°C) followed by distilling off the water formed by the esterification reaction. Alternatively, the poly(alkylene oxide)glycol (where present) is added at the start of the polycondensation step. Polymerisation is effected in a polycondensation step which is conducted using an appropriate catalyst, usually antimony trioxide, at elevated temperature (typically about 290 °C) and typically under reduced pressure (for instance about 1mm Hg), with continuous distillation of by-product(s).

Preferably, the synthetic procedure further comprises a solid phase polymerisation (SSP) step to increase and/or complete the polymerisation of the poly(alkylene oxide)glycol into the copolyester, preferably without reducing the molecular weight of the copolyester.

Thus, the product of the polycondensation reaction is preferably subjected to an SSP step. The solid phase polymerisation may be carried out in a fluidised bed, e.g. fluidised with nitrogen, or in a vacuum fluidised bed, using a rotary vacuum drier. Suitable solid phase polymerisation techniques are disclosed in, for example, EP-A-0419400. Thus, SSP is typically conducted at a temperature which is 10-50 °C below the crystalline melting point ($T_M$) of the polymer but higher than the glass transition temperature ($T_g$) (or where the copolyester exhibits multiple glass transition temperatures, higher than the highest glass transition temperature). An inert atmosphere of dry nitrogen or a vacuum is used to prevent degradation. In a preferred embodiment, solid phase polymerisation is carried out in the range of about 210 to 220°C (preferably at 215°C) under vacuum in order to induce the desired intrinsic viscosity. Typically, solid phase polymerisation is carried out over 8 to 20 hours, typically over 16 hours.

As the SSP reaction time is increased, there is a decrease in the relative amount of unreacted poly(alkylene oxide) in the extracted material. The inventors have found that as the relative amount of unreacted poly(alkylene oxide) in the extracted material decreases, the haze of the copolyester, and thus of the final composite film, also decreases.

Furthermore, the inventors have found that use of SSP increases and/or completes the polymerisation of the poly(alkylene oxide)glycol into the copolyester without disadvantageously reducing the molecular weight of the copolyester. In contrast, although increasing the polycondensation reaction time (without using a further SSP step) could increase the polymerisation of the poly(alkylene oxide) glycol into the copolyester, such a process is typically accompanied by a disadvantageous reduction in the molecular weight of the copolyester.

Preferably, the inherent viscosity of the substrate layer (A) described herein is at least 0.6 dL/g, preferably at least 0.7 dL/g, preferably at least 0.75 dL/g, preferably at least 0.77 dL/g, preferably at least 0.80 dL/g. Such viscosities are readily obtainable using SSP techniques.

The total thickness of substrate layer (A) is typically from about 0.1 to about 200 μm, preferably from about 0.5 to about 100 μm, preferably from about 12 to about 50 μm, and preferably from about 15 to about 30 μm. The thickness of polymeric layer ($A_2$) is typically from about 0.05 to 5 μm, preferably from about 0.1 to about 2 μm, preferably from about 0.5 to about 1.5 μm of the total thickness of substrate layer (A).

The primer coating layer (B) comprises a cross-linked sulfopolyester. Thus, preferably the primer coating layer (B) is derived from a composition comprising a crosslinking agent and a sulfopolyester.

The crosslinking agent functions to cross-link the composition to improve adhesion to the substrate layer (A) and to the subsequently applied heat-sealable coating layer (C). The crosslinking agent should also be capable of internal cross-linking within the composition.

Suitable crosslinking agents may be water-soluble crosslinking agents or water-insoluble crosslinking agents. Preferably, the crosslinking agent is a water-soluble crosslinking agent.

Preferably, the crosslinking agent is an organic crosslinking agent. Preferably, the organic crosslinking agent is a

water-soluble crosslinking agent.

Suitable crosslinking agents include melamines, isocyanates, oxazolines, aziridines, carbodiimides, epoxy resins, silanes and zirconium based crosslinking agents.

The crosslinking agent is preferably a melamine crosslinking agent.

As used herein, the term "melamine crosslinking agent" refers to one or more derivatives of melamine (1,3,5-triazine-2,4,6-triamine) in which the amino groups are functionalised with reactive functional groups which are capable of undergoing crosslinking reactions through the action of heat and/or an acidic catalyst.

A preferred melamine crosslinking agent comprises one or more monomeric derivatives of melamine in which some or all of the amine groups are functionalised with alkoxymethyl or hydroxymethyl groups and/or oligomers (for example dimers, trimers and tetramers) derived from such monomeric melamine derivatives. These derivatives of melamine may suitably be obtained by reaction of melamine with formaldehyde, followed by alkylation of some or all of the resulting methylol groups with an alcohol. In general, the melamine crosslinking agent (i) will contain a statistical mixture of different melamine derivatives, as determined by the formaldehyde and alkylation stoichiometries.

Preferred melamine crosslinking agents have a formaldehyde stoichiometry (defined as the number of formaldehyde equivalents per molecule of melamine) of at least 3. For example, the formaldehyde stoichiometry may be in the range of from 3 to 4.5, preferably 3.3 to 4.3, preferably 3.3 to 4.1, indicating a melamine crosslinking agent with a relatively high imine content. Alternatively, the formaldehyde stoichiometry may be greater than 4.5, preferably at least 5, preferably at least 5.5, indicating a melamine crosslinking agent with a relatively low imine content. Further preferred melamine crosslinking agents have a formaldehyde stoichiometry of at least 5.5, for example at least 5.8 or at least 5.9.

Further preferred melamine crosslinking agents have an alkylation stoichiometry (defined as the number of alkylated methylol groups per molecule of melamine) of at least 1. For example the alkylation stoichiometry may be at least 2, at least 3, at least 4 or at least 5. It will be understood that the alkylation stoichiometry may not be greater than the formaldehyde stoichiometry.

Examples of preferred melamine crosslinking agents include those having a formaldehyde stoichiometry of from 3.0 to 4.5, preferably 3.3 to 4.3, preferably 3.3 to 4.1 and an alkylation stoichiometry of from 1.0 to 3.2, preferably 1.5 to 3.0.

Further examples of preferred melamine crosslinking agents include those having a formaldehyde stoichiometry of greater than 4.5, preferably at least 5, preferably at least 5.5 and an alkylation stoichiometry of from 3.5 to 5.9, preferably 4.0 to 5.9, preferably 4.5 to 5.9.

The alkylated methylol groups are preferably selected from $C_1$ to $C_4$ alkoxymethyl groups, more preferably from methoxymethyl groups or n-butoxymethyl groups, and most preferably the alkylated methylol groups are methoxymethyl groups. Thus, the alcohol used to alkylate the methylol groups is preferably selected from $C_1$ to $C_4$ alcohols, more preferably methanol or n-butanol, and most preferably methanol.

A particularly preferred constituent of the melamine crosslinking agent is hexamethoxymethylmelamine, i.e. melamine in which each amine group is functionalised by two methoxymethyl groups.

Suitable melamine crosslinking agents for use in the present invention may be selected from those available from Cytec under the tradename Cymel®, such as Cymel® XW 3106 and Cymel® 350, preferably Cymel® XW 350. Cymel® XW 3106 is a water insoluble, specifically alkylated high solids melamine resin. Cymel® 350 is a water soluble, highly methylated monomer melamine resin.

The crosslinking agent may be a diisocyanate. Suitable diisocyanate crosslinking agents include blocked diisocyanates.

Examples of suitable diisocyanates include those having the general formula $O=C=N-R^6-N=C=O$, wherein $R^6$ represents an aliphatic or aromatic hydrocarbyl group comprising from 2 to 16 carbon atoms. Examples of suitable aromatic diisocyanates include toluene-2,4-diisocyanate, toluene-2,6-diisocyanate, methylenediphenyl-4,4'-diisocyanate, methylenediphenyl-2,4'-diisocyanate and methylenediphenyl-2,2'-diisocyanate. The methylenediphenyldiisocyanates and the toluene-diisocyanates may also be used as mixtures of isomers. Where the diisocyanate is a blocked aromatic diisocyanate, it is preferably a blocked methyldiphenyldiisocyanate (MDI). An example of a suitable blocked MDI is Grilbond® IL-6 60% GST which is commercially available from EMS-Griltech.

Examples of suitable aliphatic diisocyanates include hexamethylenediisocyanate (HDI), dicyclohexylmethane-4,4'-diisocyanate ($H_{12}$MDI; as a single isomer selected from the 4,4'-, 2,4'- and 2,2'- isomers, or as a mixture of isomers) and isophoronediisocyanate (1-isocyanato-3-isocyanatomethyl-3,5,5-trimethyl-cyclohexane; IPDI). Where the diisocyanate is a blocked aliphatic diisocyanate, it is preferably a blocked HDI. An example of a suitable blocked HDI is Trixene Aqua BI-201® which is commercially available from Baxenden Chemicals Ltd.

The diisocyanate may be in monomeric form or oligomeric form, particularly trimeric form. Trimeric diisocyanates are particularly suitable, particularly for aliphatic diisocyanates, particularly HDI.

A "blocked diisocyanate" is defined herein as a diisocyanate reaction product which is stable at room temperature but which dissociates to regenerate diisocyanate functionality respectively under the influence of heat. In other words, the functionality of the diisocyanate has been reversibly blocked by use of a chemical group, referred to hereinafter as a "blocking group".

Typically temperatures in the range from 100 (preferably from 120) to 250°C are necessary to release the blocking groups and free the diisocyanate functionality and the blocking group(s) are selected so that they volatilize from the composition.

Examples of suitable blocking groups include alcohols, caprolactam, phenols, methyl ethyl ketoxime and active methylene compounds. The choice of blocking group will depend on the identity of the diisocyanate. Where the diisocyanate is a blocked MDI, preferably the blocking group is caprolactam. Alternatively, where the diisocyanate is a blocked HDI, preferably the blocking group is 3,5-dimethylpyrazole (DMP). In one embodiment of the present invention, the epoxy resin is a modified triglycidyl ether and the blocked diisocyanate is a caprolactam-blocked MDI-based diisocyanate.

The crosslinking agent may be an oxazoline crosslinking agent.

The term "oxazoline" is used herein to describe a component which bears oxazoline reactive groups. Preferably the oxazoline crosslinking agent is a polymer with oxazoline groups. Suitable polymers may be formed by the addition polymerization of a) oxazoline derivatives according to the structural formulae (I) to (III) below and b) at least one further comonomer.

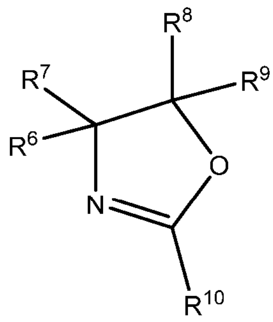 (I) 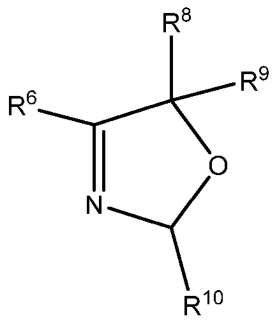 (II) 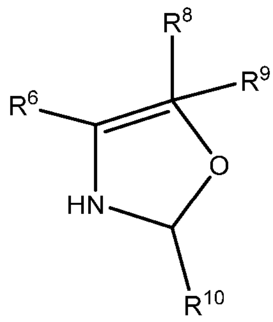 (III)

wherein $R^6$, $R^7$, $R^8$ and $R^9$ may each be independently selected from the group consisting of hydrogen, halogen, alkyl, aralkyl, phenyl or substituted phenyl; and $R^{10}$ is a non-cyclic radical which contains a polymerizable double bond.

Examples of suitable halogens include fluorine, chlorine, bromine and iodine, preferably chlorine or bromine.

Examples of suitable alkyl groups include methyl, ethyl, n-propyl, isopropyl, n-butyl, isobutyl, pentyl and hexyl groups.

Examples of suitable aralkyl groups include those which comprise $C_{1-5}$ alkyl groups for example benzyl, phenethyl, benzhydryl and naphthylmethyl groups.

Examples of suitable substituted phenyl groups may include chlorophenyl, bromophenyl, methoxyphenyl, ethoxyphenyl, methylaminophenyl, ethylaminophenyl, dimethylaminophenyl, methylethylaminophenyl and diethylaminophenyl.

Examples of suitable non-cyclic radicals with polymerizable double bonds include vinyl and isopropenyl groups.

Thus, examples of suitable oxazoline derivatives a) include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline. Polymers bearing oxazoline groups may be prepared by using the oxazoline derivatives (a) either individually or in combination. Preferably, the oxazoline derivative (a) is 2-isopropenyl-2-oxazoline.

Any compound which is copolymerizable with oxazoline derivative (a) may be used as comonomer (b). Examples of suitable comonomers (b) include methacrylic esters such as methyl methacrylate, butyl methacrylate and 2-ethyihexyl methacrylate, unsaturated carboxylic acids such as methacrylic acid, itaconic acid and malonic acid, unsaturated nitriles such as methacrylonitrile, unsaturated amides such as methacrylamide and N-methylolmethacrylamide, vinyl esters such as vinyl acetate and vinyl propionate, vinyl ethers such as methyl vinyl ether, ethyl vinyl ether, alpha-olefins such as ethene, propene, halogenated alpha,beta-unsaturated compounds such as vinyl chloride, vinylidene chloride and vinyl fluoride, and also alpha,beta-unsaturated aromatic compounds such as styrene and alpha-methyistyrene. The comonomers (b) mentioned may be used either individually or in combination.

Suitable polymers containing oxazoline groups can be prepared, for example, by adding an oxazoline derivative (a), at least one comonomer (b) and a free-radical initiator, for example benzoyl peroxide or azoisobutyronitrile, to a suitable water-miscible organic solvent and heating the resulting solution. After the polymerization has ended, water can be added and the organic solvent can be removed completely or partially by distillation, to leave an aqueous polymer dispersion containing oxazoline groups, which is directly suitable for use in the adhesive coating of the present invention.

Alternatively, it is also possible to polymerize oxazoline derivative(s) (a) and comonomer(s) (b) anionically, for example with n-butyllithium.

The content of oxazoline groups in the dried polymer is typically 0.5 to 10 mmol/g, preferably 1.5 to 8 mmol/g. The

glass transition temperature of the dried polymer is in the range between 0 and 100° C., preferably 20 to 95° C.

Suitable aqueous polymer dispersions containing oxazoline groups are commercially available under the name "EPOCROS®" from Nippon Shokubai (Japan).

Preferably the crosslinking agent which forms part of the composition from which the primer coating layer (B) of the present invention is derived is an aqueous polymer dispersion containing oxazoline groups, in particular one which is available under the trade name "EPOCROS® WS" available from Nippon Shokubai (Japan).

The crosslinking agent may be an aziridine crosslinking agent, preferably a polyfunctional aziridine. The polyfunctional aziridine crosslinking agents have at least two aziridine functional groups, and preferably have at least three aziridine functional groups. Suitable aziridine crosslinking agents include those commercially available under the trade name "Crosslinker CX-100" from DSM NeoResins or under the trade name "XAMA 7" which refers to a composition of pentaerythritol tris-[3-(1-aziridinyl)propionate].

The crosslinking agent may be a carbodiimide crosslinking agent. Examples of suitable carbodiimides include those having the general formula $R^7N=C=NR^8$, wherein $R^7$ and $R^8$ independently represent hydrogen, an aliphatic or aromatic group. Oligomeric or polymeric carbodiimide crosslinking agents may also be used. Suitable carbodiimide crosslinking agents include those commercially available from Nisshinbo Chemical Inc. under the trade name Carbodilite, such as Carbodilite E-02, E-05 and SV-02 and/or those available under the trade name "Crosslinker CX-300" from DSM NeoResins.

The crosslinking agent may be a zirconium based crosslinking agent, preferably a zircoaluminate crosslinking agent, potassium zirconium carbonate crosslinking agent or ammonium zirconium carbonate crosslinking agent. Examples of suitable zircoaluminates include those having the general formula (IV) below:

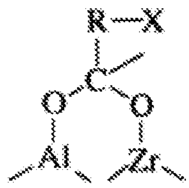

(IV)

wherein R-X is an organofunctional group, such as amino, methacryloxy or mercapto. Suitable zirconium based cross-linking agents include those commercially available under the name "Zirmel®" or "Bacote®", such as Bacote® 20, available from MEL Chemicals.

The crosslinking agent may be a silane crosslinking agent. Examples of suitable silane crosslinking agents include those having the general formula $(R^9\text{-}L)\text{-}Si(CH_3)_a(X)_{3-a}$, wherein $R^9$ is an organofunctional group, L is an alkylene linkage (preferably methylene, ethylene or propylene), X is a hydrolysable group and a is 0, 1 or 2. Suitable hydrolysable groups include alkoxy, acyloxy, halogen or amine groups. Suitable silane crosslinking agents include those commercially available under the trade name "Silquest™", such as Silquest™ A174 and Silquest™ A187, available from Momentive Performance Materials Inc.

The crosslinking agent may be an epoxy resin. Suitable epoxy resins may contain at least two epoxy groups in each molecule. Suitable epoxy resins may be aliphatic type epoxy crosslinking agents, preferably a glycidyl ether of an aliphatic polyol. Suitable epoxy crosslinking agents include those commercially available under the trade name "Denacol®", such as Denacol® EX-614B, Denacol® 512 and Denacol® 313, available from Nagase ChemteX.

Preferably the composition from which the primer coating layer (B) is derived comprises at least about 0.1% by weight, preferably at least about 0.2% by weight, preferably at least about 0.5% by weight of the crosslinking agent based on the total weight of the composition prior to drying. Preferably, the composition from which the primer coating layer (B) is derived comprises no more than about 3% by weight, preferably no more than about 2% by weight, preferably no more than about 1.5% by weight of the crosslinking agent based on the total weight of the composition prior to drying.

Thus, preferably the composition from which the primer coating layer (B) is derived comprises in the range of from about 0.1% to about 3% by weight, preferably from about 0.2% to about 2%, preferably from about 0.5% to about 1.5% by weight of the crosslinking agent based on the total weight of the composition prior to drying. Typically, the composition from which the primer coating layer (B) is derived comprises about 0.53% by weight of the crosslinking agent based on the total weight of the composition prior to drying.

Suitable sulfopolyesters comprise and preferably consist of monomeric units derived from one or more diol(s), one or more dicarboxylic acid(s) and one or more sulfomonomers. The description and preferences of the one or more diol(s) and the one or more dicarboxylic acid(s) of substrate layer (A) are equally applicable to the sulfopolyester of primer coating layer (B).

Preferably, the sulfomonomers for the primer coating layer (B) are selected from sulfonated aromatic dicarboxylic acids in which a sulfonate group is attached to the aromatic nucleus. Preferably, the sulfonate group of such a sulfomonomer is a sulfonic acid salt, preferably a sulfonic acid salt of a Group I or Group II metal, preferably lithium, sodium or potassium, more preferably sodium. Ammonium salts may also be used. The sulfonated aromatic dicarboxylic acid may be selected from any suitable aromatic dicarboxylic acid, e.g. terephthalic acid, isophthalic acid, phthalic acid, 2,5-, 2,6- or 2,7-naphthalenedicarboxylic acid. However, preferably the aromatic dicarboxylic acid of the sulfomonomer is isophthalic acid. Preferred sulfomonomers are 5-sodium sulfo-isophthalic acid and 4-sodium sulfo-isophthalic acid.

Suitable sulfopolyesters for the primer coating layer (B) of the present invention may be selected from those available from Eastman under the tradename Eastek™ 1200. Eastek™ 1200 is an aqueous dispersion of a sulfopolyester derived from 5-sodium sulfo-isophthalic acid, supplied as an aqueous solution containing 2% n-propanol and 30 wt% solids.

Preferably the composition from which the primer coating layer (B) is derived comprises at least about 0.5% by weight, preferably at least about 1% by weight, preferably at least about 2% by weight, preferably at least about 4% by weight of the sulfopolyester based on the total weight of the composition prior to drying. Preferably, the composition from which the primer coating layer (B) is derived comprises no more than about 20% by weight, preferably no more than about 15% by weight, preferably no more than about 10% by weight, preferably no more than about 8% by weight of the sulfopolyester based on the total weight of the composition prior to drying.

Thus, preferably the composition from which the primer coating layer (B) is derived comprises in the range of from about 0.5% to about 20% by weight, preferably from about 1% to about 15%, preferably from about 2% to about 10%, preferably from about 4% to about 8% by weight of the sulfopolyester based on the total weight of the composition prior to drying. Typically, the composition from which the primer coating layer (B) is derived comprises about 6% by weight of the sulfopolyester based on the total weight of the composition prior to drying.

The primer coating layer composition may comprise any of the additives conventionally used, such as catalysts, surfactants, anti-blocking agents and slip aids.

The primer coating layer may further comprise minor amounts of conventional acidic or basic catalysts, such as alkali metal carboxylates and quaternary ammonium halides. Example of suitable catalysts include ammonium p-toluenesulfonic acid (APTSA) and ammonium nitrate.

It will be appreciated that the mass percentage ratio in the dry coating of sulfopolyester/crosslinking agent is preferably from about 100/1 to about 100/50, preferably from about 100/10 to about 100/20. The mass percentage ratio in the dry coating of crosslinking agent/catalyst is preferably from about 100/1 to about 5/1, preferably from about 30/1 to about 5/1, preferably about 10/1. Thus, such catalysts are typically present in the range of from about 1% to about 20% by weight, preferably from about 3% to about 18%, preferably from about 5% to about 15%, preferably about 10% by weight based on the weight of the crosslinking agent in the dry primer coating layer (B).

The primer coating layer may further comprise minor amounts of conventional surfactants, such as polysorbate 20. An example of a suitable surfactant is Tween® 20, available from Sigma Aldrich. Tween® 20 is a polyoxyethylene sorbitol ester.

Such surfactants are typically present in an amount of no more than about 1.0%, typically no more than about 0.5%, for example about 0.2% by weight based on the total solids content of the coating composition.

The coating composition from which the primer coating layer (B) is derived suitably comprises a crosslinking agent, a sulfopolyester and a coating vehicle. Typically, the crosslinking agent and sulfopolyester are dispersed or dissolved in the coating vehicle. The coating vehicle can be any suitable coating vehicle, particularly an aqueous coating vehicle. The coating composition preferably comprises the coating vehicle in an amount such that the composition has a solids content of 1 to 15%, preferably 3% to 12%, preferably 4 to 10%, preferably 5 to 8%, preferably 6% to 7 % by weight relative to the total weight of the composition.

The primer coating layer (B) preferably has a dry thickness (i.e. the thickness of the primer coating layer in the finished composite film) of from about 5 to about 50 nm, preferably from about 10 to about 30 nm, preferably from about 15 to 25 nm.

The primer coating layer (B) composition may be disposed onto the substrate layer (A) using any suitable coating technique, typically roll coating, and including gravure roll coating and reverse roll coating, or by any spray-coating technique conventional in the art. The primer coating layer (B) is preferably disposed onto the polymeric layer ($A_2$). The primer coating layer (B) composition is then dried and/or heated to cure the composition. It will be appreciated that drying and curing steps may be conducted separately and sequentially, or may be combined into a single heat-treatment.

In one embodiment, drying and curing of the primer coating composition are performed simultaneously at a temperature of from about 100°C to about 250°C, preferably from about 100°C to about 200°C, preferably from about 125°C to about 150°C.

An advantage of the primer coating layer described herein is that it exhibits surprisingly good adhesion to the substrate layer (A) and to the subsequently applied heat-sealable coating layer (C). Thus it is possible to adhere the primer coating layer directly to substrate layer (A) and to heat-sealable coating layer (C). The present inventors have found that

the use of primer coating layer (B) improves the adhesion bond strength within the final composite film and reduces delamination between the layers of the final composite film during use.

The heat-sealable coating layer (C) disposed on the primer coating layer (B) is heat-sealable, such that it is capable of forming a heat-seal bond to itself and/or to the surfaces of a container. The polymeric material of the heat-sealable coating layer is capable of softening to a sufficient extent on heating that its viscosity becomes low enough to allow adequate wetting for it to adhere to the surface to which it is being bonded.

Preferably, the composite film exhibits a heat-seal strength to itself (i.e. by contacting its heat-sealable second layers) of at least 300 g/25mm, preferably from about 400 g/25mm to about 1000 g/25mm, and more preferably no more than about 700 g/25mm, preferably no more than about 600 g/25mm measured at the time of sealing, and preferably also after storage at 5°C for at least 24 hours.

The heat-sealable coating layer (C) comprises a first copolyester. Preferably, the first copolyester is derived from one or more diol(s) and two or more dicarboxylic acid(s).

Preferably, the heat-sealable coating layer (C) comprises a first copolyester and a second copolyester, wherein each of the first and second copolyesters are independently derived from one or more diol(s) and two or more dicarboxylic acid(s). In this embodiment, at least one of the comonomers in one of the first and second copolyesters imparts heat-sealability (as defined herein) to the heat-sealable coating layer (C).

Preferably, the first copolyester in the heat-sealable coating layer (C) is derived from an aliphatic glycol (preferably ethylene glycol), a first aromatic dicarboxylic acid (preferably terephthalic acid) and a second aliphatic dicarboxylic acid (preferably azelaic acid). Preferably, the second copolyester in the heat-sealable coating layer (C) is derived from an aliphatic glycol (preferably ethylene glycol), a first aromatic dicarboxylic acid (preferably terephthalic acid) and a second aromatic dicarboxylic acid (preferably isophthalic acid).

Preferably, the first copolyester is derived from ethylene glycol, terephthalic acid and azelaic acid. In the first copolyester, the preferred molar ratio of the first dicarboxylic acid (preferably terephthalic acid) to the second dicarboxylic acid (preferably azelaic acid) is in the range of from 50:50 to 90:10, preferably in the range from 52:48 to 70:30, and is preferably about 55:45.

Suitable first copolyesters for the heat-sealable coating layer (C) of the present invention may be selected from those available from Rohm and Haas Company under the tradename Mor-Ester™ 49002, and/or those available from Bostik under the tradename Vitel® 1906, such as Vitel® 1906 NSB-P.

Preferably the composition from which the heat-sealable coating layer (C) is derived comprises at least about 1% by weight, preferably at least about 5% by weight, preferably at least about 10% by weight, and preferably at least about 12% by weight of the first copolyester based on the total weight of the composition prior to drying. Preferably, the composition from which the heat-sealable coating layer (C) is derived comprises no more than about 20% by weight, preferably no more than about 18% by weight, preferably no more than about 16% by weight, preferably no more than about 15% by weight, and preferably no more than about 14% by weight of the first copolyester based on the total weight of the composition prior to drying.

Thus, preferably the composition from which the heat-sealable coating layer (C) is derived comprises in the range of from about 1% to about 20% by weight, preferably from about 5% to about 18% by weight, preferably from about 10% to about 16% by weight, preferably from about 10% to about 15% by weight, and preferably from about 12% to about 14% by weight of the first copolyester based on the total weight of the composition prior to drying.

Preferably, the second copolyester is derived from ethylene glycol, terephthalic acid and isophthalic acid. In the second copolyester, the preferred molar ratio of the first dicarboxylic acid (preferably terephthalic acid) to the second dicarboxylic acid (preferably isophthalic acid) is in the range of from 50:50 to 90:10, preferably in the range from 55:45 to 70:30, and is preferably about 60:40.

Suitable second copolyesters for the heat-sealable coating layer (C) of the present invention may be selected from those available from Bostik under the tradename Vitel® 1200B.

Preferably the composition from which the heat-sealable coating layer (C) is derived comprises at least about 0.1% by weight, preferably at least about 0.5% by weight, preferably at least about 1% by weight, preferably at least about 2% by weight and preferably at least about 3% by weight of the second copolyester based on the total weight of the composition prior to drying. Preferably, the composition from which the heat-sealable coating layer (C) is derived comprises no more than about 10% by weight, preferably no more than about 8% by weight, preferably no more than about 6% by weight, preferably no more than about 5% by weight and preferably no more than about 4% by weight of the second copolyester based on the total weight of the composition prior to drying.

Thus, preferably the composition from which the heat-sealable coating layer (C) is derived comprises in the range of from about 0.1% to about 10% by weight, preferably from about 0.5% to about 8% by weight, preferably from about 1% to about 6% by weight, preferably from about 2% to about 5% by weight, and preferably from about 3% to about 4% by weight of the second copolyester based on the total weight of the composition prior to drying.

The heat-sealable coating layer may also comprise a slip-aid or anti-blocking agent which improves the handling of the film, as is conventional in the art of sealant coatings. Suitable slip-aids or anti-blocking agents for the heat-sealable

coating layer (C) of the present invention may be selected from those available from PMC Biogenix under the tradename Kemamide EZ, which is a fatty amide slip-aid and/or from those available from Grace under the tradename Sylobloc®, such as Sylobloc 48. Such components are present in relatively minor amounts, typically no more than 5.0 wt%, typically no more than 2.0 wt%, typically no more than 1.0 wt% based on the total weight of the composition prior to drying.

The heat-sealable coating layer may also comprise particulate filler material. The particulate filler is preferably a particulate inorganic filler, for example metal or metalloid oxides, such as alumina, titania, talc (such as those available from Specialty Minerals under the tradename Talcron MP 15-38) and silica (especially precipitated or diatomaceous silica and silica gels), calcined china clay and alkaline metal salts (such as the carbonates and sulphates of calcium and barium). Any inorganic filler present should be finely-divided, and the volume distributed median particle diameter (equivalent spherical diameter corresponding to 50% of the volume of all the particles, read on the cumulative distribution curve relating volume % to the diameter of the particles - often referred to as the "D(v,0.5)" value) thereof is preferably in the range from 0.01 to 5 μm, more preferably 0.05 to 1.5 μm, and particularly 0.15 to 1.2 μm. Preferably at least 90%, more preferably at least 95% by volume of the inorganic filler particles are within the range of the volume distributed median particle diameter ± 0.8 μm, and particularly ± 0.5 μm. Particle size of the filler particles may be measured by electron microscope, coulter counter, sedimentation analysis and static or dynamic light scattering. Techniques based on laser light diffraction are preferred. The median particle size may be determined by plotting a cumulative distribution curve representing the percentage of particle volume below chosen particle sizes and measuring the 50th percentile.

Such components are present in relatively minor amounts, typically no more than 5.0 wt%, typically no more than 4.0 wt%, typically no more than 3.0 wt% relative to the total weight of the composition prior to drying.

The composition from which the heat-sealable coating layer (C) is derived suitably comprises a first copolyester, a second copolyester and a coating vehicle. Typically, the first and second copolyester are dispersed or dissolved in the coating vehicle. The coating vehicle can be any suitable coating vehicle, particularly tetrahydrofuran (THF) or a combination of tetrahydrofuran (THF) and toluene. Where the coating vehicle comprises THF and toluene, the weight ratio of THF to toluene is preferably in the range of from 70:30 to 90:10, preferably about 80:20.

The composition from which the heat-sealable coating layer (C) is derived preferably comprises the coating vehicle in an amount such that the composition has a solids content of 5 to 30%, preferably 8% to 25%, preferably 10 to 20%, and preferably 15% to 19% by weight relative to the total weight of the composition.

It will be appreciated that the first copolyester and, where present, the second copolyester, slip-aid agent, anti-blocking agent and/or particular filler material typically make up the solids content of the composition from the heat-sealable coating layer (C). Preferably, the first copolyester and second copolyester together make up at least about 85% by weight, preferably at least about 90% by weight, preferably at least about 93% by weight, preferably at least about 95% by weight of the solids content of the composition from which the heat-sealable coating (C) is derived.

Where the heat-sealable coating layer (C) comprises a first copolyester, and does not comprise a second copolyester, the first copolyester preferably makes up at least about 85% by weight, preferably at least about 90% by weight, preferably at least about 93% by weight, preferably at least about 95% by weight of the solids content of the composition from which the heat-sealable coating (C) is derived.

Where the heat-sealable coating layer (C) comprises a first copolyester and a second copolyester, preferably, the first copolyester makes up at least about 70% by weight, preferably at least about 73% by weight, preferably at least about 75% by weight of the solids content of the composition from which the heat-sealable coating (C) is derived. Preferably, the second copolyester makes up at least 15% by weight, preferably at least about 17% by weight, preferably at least about 18% by weight of the solids content of the composition from which the heat-sealable coating (C) is derived.

The composition from which the heat-sealable coating layer (C) preferably has a dry thickness (i.e. the thickness of the heat-sealable coating layer in the finished composite film) of about 2 to about 3.5 μm, preferably about 2.4 to about 3 μm, preferably about 2.6 to about 2.8 μm.

The composition from which the heat-sealable coating layer (C) is derived composition may be disposed onto the primer coating layer (B), using any suitable coating technique, typically roll coating, and including gravure roll coating and reverse roll coating, or by any spray-coating technique conventional in the art. The heat-sealable coating layer (C) composition is then dried, such that the solvent is removed.

In one embodiment, drying of the heat-sealable coating composition is performed at a temperature of from about 70°C to about 130°C, preferably from about 80°C to about 120°C, preferably from about 90°C to about 110°C.

An advantage of the heat-sealable coating layer described herein is that it exhibits surprisingly good adhesion to the primer coating layer (B). Moreover, it exhibits advantageous heat-seal properties to itself and to containers.

In a further embodiment, the composite film comprises an ink-receptive layer (D), on the opposite surface of substrate layer (A), such that the composite film has a DABC-structure layer. Suitable ink-receptive layers are conventional in the art and include, for instance, acrylic resin layers comprising at least one acrylic and/or methacrylic component, for instance as disclosed in WO-2018/206927-A.

Preferably, the composite film described herein is manufactured by a method comprising:

(i) providing a substrate layer (A), which is a multilayer film;
(ii) disposing a primer coating layer (B) in a coating vehicle onto a surface of substrate layer (A);
(iii) drying and heating the primer coating layer (B) composition to form a cured primer layer (B);
(iv) disposing a heat-sealable coating layer (C) in a coating vehicle onto a surface of primer coating layer (B);
(v) drying the heat-sealable coating layer composition.

Formation of the composite film is effected by conventional techniques well-known in the art. In general terms the process comprises the steps of extruding one or more layers of molten polymeric material, quenching the extrudate and orienting the quenched extrudate in at least one direction to form substrate layer (A).

The composite film may be uniaxially oriented, but is preferably biaxially oriented by drawing in two mutually perpendicular directions in the plane of the film to achieve a satisfactory combination of mechanical and physical properties. Orientation may be effected by any process known in the art for producing an oriented film, for example a tubular or flat film process. In the preferred flat film process, the film-forming polymeric material are extruded through a slot die and rapidly quenched upon a chilled casting drum to ensure that the polymer is quenched to the amorphous state. Orientation is then effected by stretching the quenched extrudate in at least one direction at a temperature above the glass transition temperature of the polymeric material. Sequential orientation may be effected by stretching a flat, quenched extrudate firstly in one direction, usually the longitudinal direction, i.e. the forward direction through the film stretching machine, and then in the transverse direction. Forward stretching of the extrudate is conveniently effected over a set of rotating rolls or between two pairs of nip rolls, transverse stretching then being effected in a stenter apparatus. Alternatively, the cast film may be stretched simultaneously in both the forward and transverse directions in a biaxial stenter. Stretching is effected to an extent determined by the nature of the polymeric material, for example polyethylene terephthalate is usually stretched so that the dimension of the oriented film is from 2 to 5, more preferably 2.5 to 4.5 times its original dimension in the or each direction of stretching. Typically, stretching is effected at temperatures in the range of 50 to 125°C. Greater draw ratios (for example, up to about 8 times) may be used if orientation in only one direction is required. It is not necessary to stretch equally in the machine and transverse directions although this is preferred if balanced properties are desired.

A stretched film may be, and preferably is, dimensionally stabilised by heat-setting under dimensional restraint at a temperature above the glass transition temperature of the polymeric material but below the melting temperature thereof, to induce crystallisation of the polymer. In applications where film shrinkage is not of significant concern, the film may be heat set at relatively low temperatures or not at all. On the other hand, as the temperature at which the film is heat set is increased, the tear resistance of the film may change. Thus, the actual heat set temperature and time will vary depending on the composition of the film but should not be selected so as to substantially degrade the tear resistant properties of the film. Within these constraints, a heat set temperature of about 135° to 250°C is generally desirable, as described in GB-A-838708.

Formation of the primer coating layer and the heat-sealable coating layer and application thereof to the substrate layer (A) is preferably effected by conventional coating techniques. Preferably, the primer coating layer (B) is coated onto the substrate layer (A) and the heat-sealable coating layer (C) is then coated onto the preformed primer coating layer (B). Coating may be effected using any suitable coating technique, including gravure roll coating, reverse roll coating, dip coating, bead coating, extrusion-coating, melt-coating or electrostatic spray coating. Coating of the heat-sealable coating layer (C) is preferably conducted "off-line", i.e. after any stretching and subsequent heat-setting employed during manufacture of the substrate layer (A). Coating of the primer coating layer (B) is preferably conducted "in-line", i.e. wherein the coating step takes place before, during or between any stretching operation(s) employed, preferably between the forward and sideways stretches of a biaxial stretching operation ("inter-draw" coating). Prior to application of the primer coating layer (B) and the heat-sealable coating layer (C), the exposed surface of the substrate layer (A) may, if desired, be subjected to a chemical or physical surface-modifying treatment to improve the bond between that surface and the subsequently applied layer. For example, the exposed surface may be subjected to a high voltage electrical stress accompanied by corona discharge. Alternatively, the substrate layer (A) may be pretreated with an agent known in the art to have a solvent or swelling action on the substrate, such as a halogenated phenol dissolved in a common organic solvent e.g. a solution of p-chloro-m-cresol, 2,4-dichlorophenol, 2,4,5- or 2,4,6-trichlorophenol or 4-chlororesorcinol in acetone or methanol.

The primary use of the film of the present invention is as a breathable film for packaging freshly cut plants such as flowers, vegetables, fruit and salads. The film described herein provides a physical barrier to entry of external contaminants, such as insects, bacteria and air-borne contaminants, which would spoil the substance contained within the packaging during transport and storage, while at the same time allowing egress of water vapour. The film may make up all or substantially all of the packaging for such products, or may comprise only part of the total packaging. For instance, the film may form a heat-sealed lid onto a receptacle in or on which the goods are disposed. The receptacle may be a tray such as a thermoformed tray or bowl, and may, for instance be formed of polyester, such as polyethylene terephthalate, or of polypropylene, polystyrene, or may be PVDC-coated. A film according to the invention is particularly suitable for use as a

lid on a receptacle made from, for instance, polyester, polystyrene or polypropylene. Sealing of the receptacle is effected by techniques well-known to those skilled in the art. Once the contents to be packaged have been introduced into the receptacle, the heat-sealable film lid is placed upon the receptacle such that the heat-sealable layer of the film is in contact with the receptacle, and is affixed using temperature and/or pressure using conventional techniques and equipment.

In the preferred embodiment, the composite film of the present invention is optically clear, preferably having a % of scattered visible light (haze) of <10%, preferably <6%, more preferably <5 % and particularly <2%, measured according to the standard ASTM D 1003. Preferably, the composite film of the present invention exhibits said haze at both the time of production and after exposure to atmospheric conditions for an extended period of time, such as 9 months post-production. Preferably, the total light transmission (TLT) in the range of 400-800 nm is at least 75%, preferably at least 80%, and more preferably at least 90%, measured according to the standard ASTM D 1003. In this embodiment, filler (if present) is typically present in only small amounts, generally not exceeding 0.5% and preferably less than 0.2% by weight of the polymer of a given layer. The inventors have found that the use of SSP during preparation of the substrate layer (A) of the composite film is particularly advantageous in providing a composite film which is optically clear.

In a **second** aspect, the present invention provides the use of a composite film as described herein as a breathable film in the packaging of cut plant(s), for instance flowers or foodstuffs (including vegetables, fruits and salads), particularly wherein said packaging comprises the film as a lidding film and further comprises a receptacle.

In a **third** aspect, the present invention provides the use of a composite film as described herein as packaging for cut plant(s), for instance flowers or foodstuffs (including vegetables, fruits and salads), particularly wherein said packaging comprises the film as a lidding film and further comprises a receptacle, for the purpose of improving the breathability of said packaging and/or extending the shelf-life of said cut plants.

In a **fourth** aspect the invention provides a method of packaging cut plant(s), for instance flowers or foodstuffs (including vegetables, fruits and salads), said method comprising the step of providing a film as described herein as at least part of said packaging, and particularly wherein said packaging comprises said film as a lidding film and further comprises a receptacle.

In a **fifth** aspect, the invention provides a sealed container comprising a receptacle containing cut plant(s), for instance flowers or foodstuffs (including vegetables, fruits and salads), and a lid formed from a polymeric film as defined herein.

In a **sixth** aspect, the invention provides a packaged, sealed product comprising cut plant(s), for instance flowers or foodstuffs (including vegetables, fruits and salads), wherein the packaging which effects and forms the seal around the food product is a composite film as defined herein which is heat-sealed to itself.

The description and preferences of the first aspect are equally applicable to the second to sixth aspects respectively.

The following test methods may be used to characterise the composite film:

(i) ***Glass transition temperature ($T_g$), crystalline temperature ($T_c$) and crystalline melting point ($T_m$)***

These thermal parameters were measured by differential scanning calorimetry (DSC) using a PerkinElmer HyperDSC 8500. Unless otherwise stated, measurements were made according to the following standard test method and based on the method described in ASTM E1356-98. The sample was maintained under an atmosphere of dry nitrogen for the duration of the scan. A flow rate of 20 ml min$^{-1}$ and Al pans were used. Samples (5 mg) were initially heated at 20 °C min$^{-1}$ from 20 °C to 350 °C in order to erase the previous thermal history (1$^{st}$ heating scan). After an isothermal hold at 350 °C for 2 min, samples were cooled at 20 °C min$^{-1}$ to 20 °C (1$^{st}$ cooling scan). Samples were then reheated at 20°C min$^{-1}$ to 350 °C (2$^{nd}$ heating scan). Values of $T_g$ and $T_M$ were obtained from 2$^{nd}$ heating scans. As is well known, the glass transition temperature of a polymer is the temperature at which it changes from a glassy, brittle state to a plastic, rubbery state.

The value of a $T_g$ was determined as the extrapolated onset temperature of the glass transition observed on the DSC scans (heat flow (W/g) against temperature (°C)), as described in ASTM E1356-98. It will be appreciated that the copolyesters of the present invention may be associated with two $T_g$ values, one $T_g$ for the soft segments and one $T_g$ for the hard segments.

The values of $T_c$ and $T_m$ were determined from the DSC scans as the peak exotherm or endotherm of the transition.

(ii) ***Intrinsic Viscosity (IV)***

($\eta_{inh}$) was determined at 25 °C for 0.1 % w/v solutions of the polymer in $CHCl_3$/TFA (2:1) using a Schott-Geräte CT-52 auto-viscometer, with capillary No. 53103. Inherent viscosities were calculated as:

$$\eta_{inh} = \ln[(t_2/t_1)/c]$$

wherein:

$\eta_{inh}$ = Inherent Viscosity (dL/g)
$t_1$ = Flow time of solvent (s)
$t_2$ = Flow time of the polymer solution (s)
c = Concentration of the polymer (g/dL)

(iii) ***Molecular Weight ($M_w$)***
GPC measurements were performed on a Malvern/Viscotek TDA 301 using an Agilent PL HFIPgel guard column plus 2 x 30 cm PL HFIPgel columns. A solution of HFIP with 25 mM NaTFAc was used as eluent, with a nominal flow rate of 0.8 mL $min^{-1}$. All experimental runs were conducted at 40 °C, employing a refractive index detector. Molecular weights are referenced to polymethylmethacrylate calibrants. Data capture and subsequent data analysis were carried out using Omnisec software. Samples were prepared at a concentration of 2 mg $mL^{-1}$, with 20 mg of sample dissolved in 10 mL eluent. These solutions were stirred for 24 h at room temperature and then warmed at 40 °C for 30 mins to fully dissolve the polymer. Each sample was filtered through a 0.45 μm polytetrafluoroethylene membrane prior to injection.

(iv) ***Clarity*** of the film is evaluated by measuring total light transmission (TLT) and haze (% of scattered transmitted visible light) through the total thickness of the film using a Gardner XL 211 hazemeter in accordance with ASTM D-1003-61.

(v) ***Heat-seal strength of the heat-sealable layer to itself*** is measured by positioning together and heating the heat-sealable (second) layers of two samples of polyester film at 165°C for a dwell time of 0.7 seconds under a pressure of 80 psi, unless otherwise stated. The sealed film is cooled to room temperature, and the sealed composite cut into 25mm wide strips. The heat-seal strength is determined by measuring the force required under linear tension per unit width of seal to peel the layers of the film apart at a constant speed of 4.23 mm/second. The mean average of multiple measurements is calculated.

(vi) ***Heat-seal strength to a container*** is measured by the following procedure. The coated film is sealed, by means of the coating layer, to a container using a Microseal PA 201 (Packaging Automation Ltd, England) tray sealer at a temperature of 180°C, and pressure of 80 psi for 0.7 sec. Strips (25mm) of the sealed film and tray are cut out at 90° to the seal, and the load required to pull the seal apart measured using an Instron Model 4301 operating at a crosshead speed of 0.2 $m.min^{-1}$. The procedure is repeated and a mean value of 5 results calculated.

(vii) ***Water vapour transmission rates*** are measured using a Lyssy Water Vapour Permeation Tester model number L80-5000. Test samples are prepared by cutting around a template (100x110mm). Once cut to size samples are sealed into a standard Lyssy sample holder.

Prior to testing the equipment is calibrated using standard 19micron and 36micron PET film (Melinex® S; DuPont Teijin Films; m.p. 248°C; relative density at 23°C of 1.40). In order to keep the conditioning and measuring chambers apart an impermeable foil laminate is used in between testing of samples. During sample changeover the test specimen and the foil layer are placed on top of each other to ensure that at no time the measuring chamber is directly exposed to the conditioning chamber.

Testing is carried out at a temperature of 38°C and at 90% relative humidity. Equilibrium is reached when consecutive results change by less than 2% indicated by an asterisk on the equipment printout. Water vapour transmission rate quoted in $g/m^2$/day is recorded when 5 consecutive asterisks are seen on the printout. The mean average of multiple measurements is calculated.

(viii) ***Dry thickness of the primer coating layer (B)*** is measured using ellipsometry. Test samples were flat, clean, fingerprint-free and scratch-free samples. The ellipsometric measurements were taken in the tranverse direction on a Sentech SE400 ellipsometer at an incidence angle of between 55° to 70° from the surface normal. The refractive index ($R_i$) and absorption coefficient (K) were also determined.

The invention is further illustrated by the following examples. It will be appreciated that the examples are for illustrative purposes only and are not intended to limit the invention as described above. Modification of detail may be made without departing from the scope of the invention, which is defined in the appended claims.

## EXPERIMENTAL

An illustrative reaction scheme to prepare preferred copolyesters of the substrate layer (A) of the present invention is shown in Scheme 1 below.

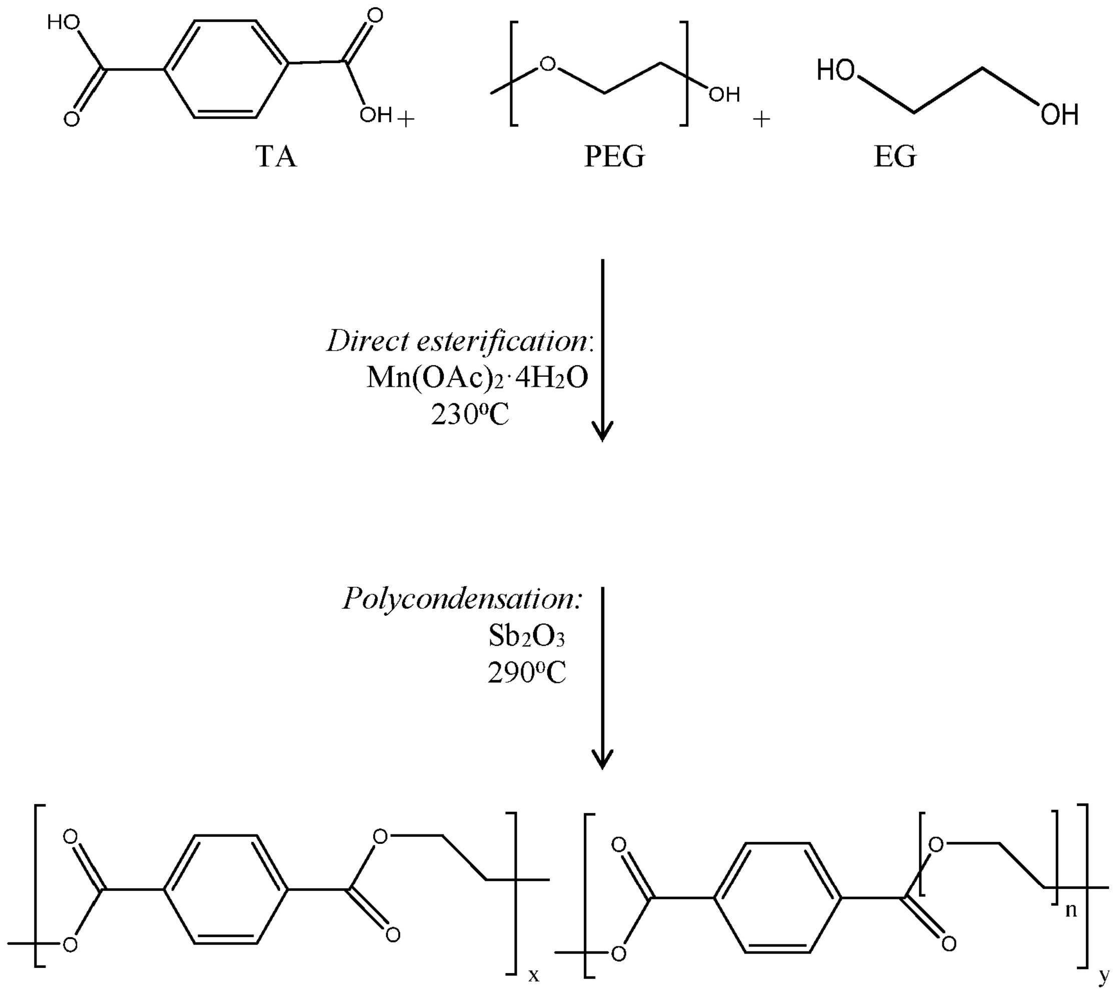


TA PEG EG

PET.PEG

**Scheme 1:** Direct esterification and subsequent polycondensation to give a copolyester as described herein.

*Experiment 1: Preparation of substrate layer (A) using SSP and haze measurement thereof*

A series of copolyesters were made using terephthalic acid, ethylene glycol and polyethylene glycol (PEG 3450). The final copolyester comprised PEG 3450 in an amount of 12 wt% relative to the total weight of the copolyester. The copolyesters were made generally in accordance with Scheme 1 above via direct esterification followed by polycondensation. The copolyesters were optionally subjected to solid state polymerisation under the processing conditions given in Table 1 below. As the polycondensation reaction proceeded, the viscosity of the batch increased, and once a predetermined viscosity had been achieved the polymerisation reaction was stopped by restoring the pressure in the vessel back to atmosphere.

The copolyesters were then melt extruded, cast onto a cooled rotating drum and stretched in the direction of extrusion to approximately 3.2 times its original dimensions at a temperature of 50°C. The film was passed into a stenter oven at a temperature of about 100-110°C, where the film was stretched in the transverse direction to approximately 3.7 times its original dimensions. The final thickness of substrate layer (A) was 23 μm.

A standard PET monolayer (23 μm) film was also prepared as a control film (Example 1).

The haze of each of substrate layer (A) (Examples 2, 3 and 4) and the control film was measured as defined herein and the results shown in Table 1 (in which "n/m" means "not measured").

***Table 1: Effect of SSP conditions on the haze of a 23μm film made from the copolyester***

| | | | Haze (%) | | |
|---|---|---|---|---|---|
| **Example** | **Final IV** | **SSP Reaction time (mins)** | **@ SSP Reaction Temperature 100°C** | **@ SSP Reaction Temperature 120°C** | **@ SSP Reaction Temperature 140°C** |
| Ex.1 100% PET | n/m | 0 | 5.9 | 6.3 | 6.0 |
| | | 0.5 | 6.3 | 6.7 | 6.5 |
| | | 5 | 6.2 | 8.1 | 12.0 |
| | | 30 | 7.5 | 11.1 | 25.4 |
| Ex.2 | 0.65 | 0 | 5.8 | 6.0 | 5.0 |
| | | 0.5 | 6.4 | 6.0 | 10.3 |
| | | 5 | 8.4 | 18.0 | 44.1 |
| | | 30 | 22.8 | 51.4 | 54.5 |
| Ex.3 | 0.74 | 0 | n/m | n/m | n/m |
| | | 0.5 | 11.6 | 12.5 | 13.6 |
| | | 5 | 13.4 | 15.6 | 21.1 |
| | | 30 | 14.4 | 17.7 | 30.3 |
| Ex.4 | 0.77 | 0 | n/m | n/m | n/m |
| | | 0.5 | 6.4 | 8.5 | 8.9 |
| | | 5 | 7.3 | 10.8 | 12.1 |
| | | 30 | 10.2 | 20.7 | 16.5 |

A further film was prepared based on the copolyester described above, wherein the copolyester exhibited an intrinsic viscosity of 0.82, except that the final thickness of substrate layer (A) was 19 μm. The haze of substrate (A) was measured as defined herein at the time of production and after exposure to atmospheric conditions for 9 months post-production. The haze of substrate (A) was 5.0% at the time of production and 4.2% at 9 months post-production.

As demonstrated by the data of Table 1, increasing the intrinsic viscosity of the copolyester via solid state polymerisation results in decreased haze formation. The inventors have found that increasing the intrinsic viscosity of the copolyester via solid state polymerisation increases the relative amount of PEG3450 component copolymerised with the BHET component, which was confirmed by DSC. Thus, the relative amount of polyethylene glycol which can migrate and cause haziness at film surfaces decreases. Thus, solid state polymerisation is preferably performed as an additional polymerisation step to aid the copolymerisation of the polyethylene glycol and polyester units within the copolyester of substrate (A) and hence to decrease the rate of haze formation.

Moreover, as demonstrated by the data above, substrate (A) advantageously exhibits no increase in haze formation following exposure to atmospheric conditions for extended periods of time.

*Experiment 2: WVTR of substrate (A)*

Two further films were prepared substantially according to the method of Experiment 1 and using the same copolyester described therein, wherein the copolyester exhibited an intrinsic viscosity of 0.65 and 0.77 respectively. The final thickness of substrate (A) was between 20 and 23 μm. The WVTR of each film was tested as described herein. The WVTR of substrate (A) comprising the copolyester exhibiting an IV of 0.65 was 135 g/$m^2$/day. The WVTR of substrate (A) comprising the copolyester exhibiting an IV of 0.77 was 131 g/$m^2$/day. Thus, increasing the intrinsic viscosity of the copolyester via solid state polymerisation does not significantly decrease the WVTR of the resulting film.

*Experiment 3: Composite Films of ABC-layer structure*

In these Examples, composite films were prepared, as set out in Table 2 (in which the term "C.Ex." refers to a comparative example). The composite films had an ABC-layer structure wherein layer A is a (mono-layer) substrate, layer B is the primer coating layer and layer C is the heat-sealable coating layer.

The substrate layer (A) was based on Example 4 as described above, i.e. a substrate comprising a copolyester

derived from terephthalic acid, ethylene glycol and polyethylene glycol (PEG 3450). The copolyester comprises PEG 3450 in an amount of 12 wt% relative to the total weight of the copolyester. The biaxially stretched substrate layer (A) has a thickness of 23 μm.

The primer coating layer composition (B) was applied to the surface of the biaxially stretched substrate. The primer coating layer composition B was prepared by dissolving 1000 ml of Eastek 1200, 265 ml of Cymel 350, 30 ml APTSA and 116 ml Tween in 3590 ml of water.

The primer coating layer composition B had a solids content of 6.8% by weight. This primer coating composition is referred to in these examples as primer coating composition B1. The primer coating layer composition B was applied by direct gravure coating using a 220 mesh gravure at a coat-weight of 3.0 g/m$^2$. The coated substrate layer was passed into a stenter oven at a temperature of about 100-110°C, where the coated substrate layer was dried and cured and where the film was stretched in the transverse direction to approximately 3.7 times its original dimensions. The film was then passed through a stenter oven where it reached a temperature of about 220°C before being cooled. The dry thickness of primer coating layer B was 24.8 nm.

A heat-sealable coating layer was then coated onto the dried primer coating layer (B) as described above. In the comparative examples where a primer coating layer (B) was not present, the heat-sealable coating layer was instead coated directly onto the substrate layer (A). Heat-sealable coating layer composition C1 or C2 was used. Where the heat-sealable coating layer composition was applied at a coat-weight of 3.0 g/m$^2$, the dry thickness of the heat-sealable coating layer was 2.2 μm.

C1: Prepared by mixing 5800 lbs THF, a solution of 352 lbs Vitel 1200B in 1520 lbs THF and 1392 lbs Vitel 1906 NSB-P. The mixture was heated to 52-58°C and agitated for at least 2.5 hours. Then, 1000 lbs of THF, 27.8 lbs of Kemamide - EZ and 55.8 lbs of Talcron 15-38 were added to the mixture. This mixture was then heated to 45-55°C and agitated for at least 30 minutes. A further THF flush was added to provide a heat-sealable coating layer composition C1 having a solids content of 17.0% by weight.

C2: Prepared by mixing 4920 lbs THF and 1590 lbs Vitel 1906 NSB-P. The mixture was heated to 52-58°C and agitated for at least 2.5 hours. Then, 1280 lbs of THF, 25.5 lbs of Kemamide - EZ and 8.9 lbs of Sylobloc 48x1962 were added to the mixture. This mixture was then heated to 45-55°C and agitated for at least 30 minutes. A THF flush was added. Then, 1650 lbs of toluene was added to the mixture. This mixture was then heated to 47-53 °C and agitated for at least 30 minutes. A further THF flush was added to provide a heat-sealable coating layer composition C2 having a solids content of 16.5% by weight. The coating vehicle of the composition C2 was 80.0% THF and 20.0% toluene by weight relative to the total weight of the coating vehicle.

The heat-sealable coating layer composition (C1 or C2) was applied by solvent coating at the coat weight shown in Table 3. The coated film was dried at 90-110°C to provide the final composite film.

The final composite film was heat-sealed to itself and the peel strengths of the composite films were tested as described herein. The results are provided in Table 2.

The WVTR of Example 9 was tested as described herein, and was found to be 130-155 (g/m$^2$/day). Additionally, the film of Example 9 demonstrated excellent sealability and peelability to containers.

Further films were prepared based on Example 9, except that the primer coating layer composition B had a solids content of 4.0%, 6.0% and 8.5% by weight respectively. The dry thickness of primer coating layer B was 15.8, 22.1 and 32.9 nm respectively. These further films also exhibited a high water vapour transmission rate (WVTR).

***Table 2***

| Example | Composite film | | | | Acceptable Peel | Peel Strength at time of seal |
|---|---|---|---|---|---|---|
| | Substrate (A) | Primer (B) | Heat-sealable Layer (C) | | | |
| | | | Composition | Coating weight (g/m$^2$) | | |
| C.Ex. 5 | 100% PET | n/a | C2 | 3.5 | Yes - normal peel | 900 |
| C.Ex. 6 | Example 4 | n/a | C2 | 3.5 | No - delamination between substrate (A) layer and heat-sealable coating layer (C) during peel | 1093 |
| C.Ex. 7 | Example 4 | n/a | C1 | 2.5 | No -delamination between substrate (A1) layer and heat-sealable coating layer (C1) during peel, no clean peel | 677 |
| C.Ex.8 | Example 4 | n/a | C1 | 1.5 | No - no clean peel | 458 |

(continued)

| Example | Composite film | | | | Acceptable Peel | Peel Strength at time of seal |
|---|---|---|---|---|---|---|
| | Substrate (A) | Primer (B) | Heat-sealable Layer (C) | | | |
| | | | Composition | Coating weight ($g/m^2$) | | |
| C.Ex. 9 | Example 4 | B1 | C1 | 3.0 | n/m | n/m |

*Experiment 4: Composite Films of $A_1A_2BC$-layer structure*

In these Examples, composite films were prepared as set out in Table 3. The composite films had an $A_1A_2BC$-layer structure wherein layer $A_1$ is the base layer, layer $A_2$ is the polymeric layer, B is the primer coating layer and layer C is the heat-sealable coating layer.

The base layer ($A_1$) was based on Example 4 as described above, i.e. a copolyester was prepared by reacting terephthalic acid, ethylene glycol and polyethylene glycol (PEG 3450). The copolyester A1 of base layer ($A_1$) comprises PEG 3450 in an amount of 12 wt% relative to the total weight of the copolyester.

In Example 15, and a number of the comparative Examples, the polyester of polymeric layer ($A_2$) was prepared by reacting terephthalic acid and ethylene glycol only to form PET. In Example 19, the copolyester A3 of polymeric layer ($A_2$) was prepared by reacting terephthalic acid, ethylene glycol and polyethylene glycol (PEG 400). The copolyester (A3) comprises PEG 400 in an amount of 12 wt% relative to the total weight of the copolyester. In Example 20, the copolyester A2 of polymeric layer ($A_2$) was prepared by reacting terephthalic acid, ethylene glycol, polyethylene glycol (PEG 400) and isophthalic acid (IPA). The copolyester (A2) comprises PEG 400 in an amount of 12 wt% and IPA in an amount of 18 wt% relative to the total weight of the copolyester.

The bi-layer films made up of base layer ($A_1$) and polymeric layer ($A_2$) were manufactured by coextrusion. The polyesters were coextruded using separate streams supplied from separate extruders, to a single channel coextrusion assembly. The polymer layers were then melt extruded, cast onto a cooled rotating drum and stretched in the direction of extrusion to approximately 3.2 times its original dimensions at a temperature of 56-62°C. The film was passed into a stenter oven at a temperature of about 110°C, where the film was stretched in the transverse direction to approximately 3.6-3.8 times its original dimensions. The thickness of the coextruded substrate layer film comprising base layer ($A_1$) and polymeric layer ($A_2$) was 23 $\mu$m.

Primer coating layer composition B1 was then applied to the surface of polymeric layer ($A_2$) of the coextruded film, in accordance with Experiment 3 above. A heat-sealable coating layer composition (C1 or C2) was then coated onto the dried primer layer, in accordance with Experiment 3 above.

The final composite film was heat-sealed to itself and the peel strengths and WVTR of the composite films were tested as described herein. The exceptions were: C.Ex.11 which was heat-sealed at 165°C with a dwell time 0.3 seconds; C.Ex.12 which was heat-sealed at 150°C with a dwell time 0.7 seconds; and C.Ex.13 which was heat-sealed at 150°C with a dwell time 0.3 seconds. The results are provided in Table 3.

As demonstrated by the data in Table 3, the composite films of the present invention exhibit excellent sealability and peelability. In particular, the composite films of Examples 19 and 20 (wherein each of base layer ($A_1$) and polymeric layer ($A_2$) independently comprises a copolyester comprising monomeric units derived from one or more diol(s), one or more dicarboxylic acid(s) and one or more poly(alkylene oxide) glycol(s)) exhibit an advantageous combination of high water vapour transmission rate (WVTR) and excellent sealability and peelability. In comparison, the comparative composite films exhibited a relatively low water vapour transmission rate (WVTR) and/or unacceptable sealability and peelability characteristics.

Table 3

| Example | Composite film | | | | | Acceptable Peel? | Peel Strength | | WVTR ($g/m^2$/day) |
|---|---|---|---|---|---|---|---|---|---|
| | Layer $A_1$ | Layer $A_2$ | Layer B | Layer C | | | | | |
| | | | | Composition | Coating weight ($g/m^2$) | | At time of seal | After 24 h @ 5°C | |
| C.Ex.10 | Ex.4 | 100% PET | n/a | CI | 2.5 | Yes | 1200 | 593 | 65-75 |

(continued)

| Example | Composite film | | | | | Acceptable Peel? | Peel Strength | | WVTR ($g/m^2$/day) |
|---|---|---|---|---|---|---|---|---|---|
| | Layer $A_1$ | Layer $A_2$ | Layer B | Layer C | | | | | |
| | | | | Composition | Coating weight ($g/m^2$) | | At time of seal | After 24 h @ 5°C | |
| C.Ex.11 | Ex.4 | 100% PET | n/a | C1 | 2.5 | No-shredding/tearing | 787 | 817 | 65-75 |
| C.Ex.12 | Ex.4 | 100% PET | n/a | C1 | 2.5 | Yes | 782 | 471 | 65-75 |
| C.Ex.13 | Ex.4 | 100% PET | n/a | C1 | 2.5 | No - peel strength too weak | n/m | 154 | 65-75 |
| C.Ex.14 | Ex.4 | 100% PET | n/a | C1 | 1.5 | Yes | 900 | 735 | 65-75 |
| Ex. 15 | Ex.4 | 100% PET | B1 | C1 | 2.5 | Yes | 553 | 387 | 65-75 |
| C.Ex. 16 | Ex.4 | 100% PET | n/a | C2 | 3.5 | No - shredding/tearing , no clean peel | 622 | 723 | n/m |
| C.Ex.17 | Ex.4 | 100% PET | n/a | C2 | 2.0 | No - no clean peel | nfm | n/m | n/m |
| C.Ex.18 | Ex.4 | A2 | n/a | n/a | n/a | No - no clean peel | n/m | n/m | n/m |
| Ex.19 | Ex.4 | A3 | B1 | C1 | 3.0 | Yes | n/m | n/m | 130-155 |
| Ex. 20 | Ex. 4 | A2 | B1 | C1 | 3.0 | n/m | n/m | n/m | 130 -155 |

## Claims

**1.** A breathable, heat-sealable, composite film comprising substrate layer (A), a primer coating layer (B) disposed on the substrate layer, and a heat-sealable coating layer (C) disposed on the primer coating layer, wherein

(i) substrate layer (A) is a multilayer film comprising base layer ($A_1$) and polymeric layer ($A_2$), wherein base layer ($A_1$) and polymeric layer ($A_2$) independently comprise a polyester comprising monomeric units derived from one or more diol(s), one or more dicarboxylic acid(s) and one or more poly(alkylene oxide) glycol(s);
(ii) primer coating layer (B) comprises a cross-linked sulfopolyester; and
(iii) heat-sealable coating layer (C) comprises a first copolyester.

**2.** A film according to claim 1 wherein heat-sealable coating layer (C) comprises a second copolyester.

**3.** A film according to any preceding claim wherein primer coating layer (B) is derived from a composition comprising a sulfopolyester and a cross-linking agent.

**4.** A film according to any preceding claim wherein the polyester(s) of substrate layer (A) comprises an aromatic dicarboxylic acid, preferably terephthalic acid, isophthalic acid, phthalic acid and/or 2,5-, 2,6- or 2,7-naphthalene dicarboxylic acid, and preferably terephthalic acid;
and/or wherein the polyester(s) of substrate layer (A) comprises an aliphatic diol, preferably aliphatic diols containing 2-8 carbon atoms, preferably ethylene glycol and 1,4-butanediol, more preferably ethylene glycol.

**5.** A film according to any of claims 1 to 4, wherein the poly(alkylene oxide)glycol of the copolyester(s) of substrate layer (A) is selected from polyethylene glycol (PEG), polypropylene glycol (PPG) and poly(tetramethylene oxide) glycol (PTMO), and preferably from polyethylene glycol;
and/or wherein the poly(alkylene oxide)glycol of the copolyester of base layer ($A_1$), has a weight average molecular

weight of from 400 to 10,000, preferably from 1000 to 6000, preferably from 2000 to 4500, preferably from 3000 to 4000, and preferably from 3200 to 3600, wherein the weight average molecular weight is tested according to the method provided in the description.

**6.** A film according to claim 1, or according to any one of claims 4 or 5, wherein the poly(alkylene oxide)glycol of the copolyester of polymeric layer ($A_2$) has a weight average molecular weight of from 200 to 800, preferably from 250 to 600, preferably from 300 to 500, preferably from 350 to 450, wherein the weight average molecular weight is tested according to the method provided in the description.

**7.** A film according to any of claims 1 to 6, wherein the amount of poly(alkylene oxide)glycol present in the copolyester(s) of substrate layer (A) is 5 to 40 wt%, preferably 5 to 30 wt%, preferably 10 to 20 wt%, and preferably 10 to 15 wt%, relative to the total weight of said copolyester (i.e. relative to the total weight of copolyester in base layer ($A_1$) or in polymeric layer ($A_2$) respectively).

**8.** A film according to claim 1, or according to any one of claims 4 to 7, wherein the copolyester of base layer ($A_1$) is different to the copolyester of polymeric layer ($A_2$).

**9.** A film according to claim 8 wherein:

(a) polymeric layer ($A_2$) comprises a copolyester derived from an aliphatic glycol, a aromatic dicarboxylic acid, and a poly(alkylene oxide) glycol; preferably wherein said aliphatic glycol is ethylene glycol, said first aromatic dicarboxylic acid is terephthalic acid and said poly(alkylene oxide) glycol is polyethylene glycol; or
(b) polymeric layer ($A_2$) comprises a copolyester derived from an aliphatic glycol, a aromatic dicarboxylic acid, and a second dicarboxylic acid; preferably wherein said aliphatic glycol is ethylene glycol, said first aromatic dicarboxylic acid is terephthalic acid and said second dicarboxylic acid is isophthalic acid;
preferably wherein the amount of the second dicarboxylic acid present in the copolyester of the polymeric layer ($A_2$) is in the range of 5 to 40 wt%, preferably in the range of 10 to 30 wt%, and preferably in the range of 15 to 20 wt%, relative to the total weight of the copolyester in layer ($A_2$); or
(c) polymeric layer ($A_2$) comprises a copolyester derived from an aliphatic glycol, a first aromatic dicarboxylic acid, a second dicarboxylic acid and a poly(alkylene oxide) glycol; preferably wherein said aliphatic glycol is ethylene glycol, said first aromatic dicarboxylic acid is terephthalic acid, said second dicarboxylic acid is isophthalic acid and said poly(alkylene oxide) glycol is polyethylene glycol;

preferably wherein the amount of the second dicarboxylic acid present in the copolyester of the polymeric layer ($A_2$) is in the range of 5 to 40 wt%, preferably in the range of 10 to 30 wt%, and preferably in the range of 15 to 20 wt%, relative to the total weight of the copolyester in layer ($A_2$).

**10.** A film according to any preceding claim wherein:

(a) the inherent viscosity of the substrate layer (A) is at least 0.6 dL/g, preferably at least 0.7 dL/g, preferably at least 0.75 dL/g, preferably at least 0.77 dL/g, wherein the inherent viscosity is tested according to the method provided in the description; and/or
(b) the thickness of substrate layer (A) is from 0.1 to 200 $\mu$m, preferably from 0.5 to 100 $\mu$m, preferably from 12 to 50 $\mu$m, and preferably from 15 to 30 $\mu$m; and/or
(c) the crosslinking agent of primer coating layer (B) is or comprises a water-soluble crosslinking agent.

**11.** A film according to any preceding claim wherein:

(a) the crosslinking agent of primer coating layer (B) is selected from a melamine, isocyanate, oxazoline, aziridine, carbodiimide, epoxy resin, silane and zirconium based crosslinking agent;
preferably wherein the crosslinking agent of primer coating layer (B) is a melamine crosslinking agent; and/or
(b) the composition from which the primer coating layer (B) is derived comprises in the range of from 0.1% to 3% by weight, preferably from 0.2% to 2%, preferably from 0.5% to 1.5% by weight of the crosslinking agent based on the total weight of the composition prior to drying; and/or
(c) the sulfopolyester of primer coating layer (B) comprises monomeric units derived from one or more diol(s), one or more dicarboxylic acid(s) and one or more sulfomonomers, preferably wherein the one or more diol(s) are as defined in claim 4 and/or wherein the one or more dicarboxylic acid(s) are as defined in claim 4, preferably wherein the sulfomonomer is a sulfonated aromatic dicarboxylic acid, preferably wherein the sulfomonomer is selected

from 5-sodium sulfo-isophthalic acid and 4-sodium sulfo-isophthalic acid.

**12.** A film according to any preceding claim wherein:

(a) the composition from which the primer coating layer (B) is derived comprises in the range of from 0.5% to 20% by weight, preferably from 1% to 15%, preferably from 2% to 10%, preferably from 4% to 8% by weight of the sulfopolyester based on the total weight of the composition prior to drying; and/or
(b) the composition from which the primer coating layer (B) is derived comprises a coating vehicle, preferably wherein the composition comprises the coating vehicle in an amount such that the composition has a solids content of 1 to 15%, preferably 3% to 12%, preferably 4 to 10%, preferably 5 to 8%, preferably 6% to 7 % by weight relative to the total weight of the composition; and/or
(c) the thickness of primer coating layer (B) is from 5 to 50 nm, preferably from 10 to 30 nm, preferably from 15 to 25 nm.

**13.** A film of any preceding claim wherein:

(a) the heat-sealable coating layer (C) is derived from a composition comprising a first copolyester derived from an aliphatic glycol, a first aromatic dicarboxylic acid and a second aromatic dicarboxylic acid, preferably wherein the aliphatic glycol contains 2-8 carbon atom and is preferably ethylene glycol, preferably wherein the first aromatic dicarboxylic acid is terephthalic acid, and preferably wherein the second aromatic dicarboxylic acid is azelaic acid;
preferably wherein the molar ratio of the first dicarboxylic acid to the second dicarboxylic acid in the first copolyester is in the range of from 50:50 to 90:10, preferably in the range from 52:48 to 70:30, and is preferably 55:45; and/or
(b) the composition from which the heat-sealable coating layer (C) is derived comprises in the range of from 1% to 20% by weight, preferably from 5% to 18% by weight, preferably from 10% to 15% by weight, and preferably from 12% to 14% by weight of the first copolyester based on the total weight of the composition prior to drying.

**14.** A film according to any preceding claim wherein the heat-sealable coating layer (C) comprises a second copolyester derived from an aliphatic glycol, a first aromatic dicarboxylic acid and a second aliphatic dicarboxylic acid, preferably wherein the aliphatic diol contains 2-8 carbon atom and is preferably ethylene glycol, preferably wherein the first aromatic dicarboxylic acid is terephthalic acid, and preferably wherein the second aliphatic dicarboxylic acid is isophthalic acid.

**15.** A film according to claim 14 wherein:

(a) the molar ratio of the first dicarboxylic acid to the second dicarboxylic acid in the second copolyester is in the range of from 50:50 to 90:10, preferably in the range from 55:45 to 70:30, and is preferably 60:40; and/or
(b) the composition from which the heat-sealable coating layer (C) is derived comprises in the range of from 0.1% to 10% by weight, preferably from 0.5% to 8% by weight, preferably from 1% to 6% by weight, preferably from 2% to 5% by weight and preferably from 3% to 4% by weight of the second copolyester based on the total weight of the composition prior to drying.

**16.** A film according to any preceding claim wherein:

(a) the composition from which the heat-sealable coating layer (C) is derived comprises a coating vehicle, preferably wherein the composition comprises the coating vehicle in an amount such that the composition has a solids content of 5 to 30%, preferably 8% to 25%, preferably 10 to 20%, and preferably 15% to 19% by weight relative to the total weight of the composition; and/or
(b) the thickness of heat-sealable coating layer (C) is 2 to 3.5 $\mu$m, preferably 2.4 to 3 $\mu$m, preferably 2.6 to 2.8 $\mu$m; and/or
(c) the film is oriented, preferably biaxially oriented.

**17.** A film according to any preceding claim wherein:

(a) the film exhibits a haze of less than 10%, preferably less than 6%, preferably less than 5% and preferably less than 2%, wherein the haze is measured according to the standard ASTM D 1003; and/or
(b) the film exhibits a water vapour transmission rate of at least 80 g/m$^2$/day, preferably at least 90 g/m$^2$/day,

preferably at least 100 g/m$^2$/day, preferably at least 115 g/m$^2$/day, preferably at least 130 g/m$^2$/day, preferably at least 140 g/m$^2$/day, and more preferably at least 150 g/m$^2$/day, wherein the water vapour transmission rate is tested according to the method provided in the description.

**18.** A method for manufacturing a composite film according to any one of claims 1 to 17, wherein the method comprises:

(i) providing a substrate layer (A);
(ii) disposing a primer coating layer (B) in a coating vehicle onto a surface of substrate layer (A);
(iii) drying and heating the primer coating layer (B) composition to form a cured primer layer (B);
(iv) disposing a heat-sealable coating layer (C) in a coating vehicle onto a surface of primer coating layer (B);
(v) drying the heat-sealable coating layer composition;
optionally wherein the method further comprises the step of making the polyester of substrate layer (A) by solid state polymerisation.

**19.** Use of a composite film according to any one of claims 1 to 17 as a breathable film in the packaging of cut plants, preferably wherein said film is a lidding film in said packaging, said packaging comprising said film as a lidding film and a receptacle;
preferably for the purpose of improving the breathability of said packaging and/or extending the shelf-life of said cut plants.

**20.** A method of packaging cut plants, said method comprising the step of providing a film according to any one of claims 1 to 17 as at least part of said packaging.

**21.** A sealed container comprising a receptacle containing cut plants, and a lid formed from a film according to any one of claims 1 to 17.

**22.** A packaged, sealed product comprising cut plants, wherein the packaging which effects and forms the seal around the food product is a composite film according to any one of claims 1 to 17 which is heat-sealed to itself.

## Patentansprüche

**1.** Atmungsaktive heißsiegelfähige Verbundfolie, umfassend eine Substratschicht (A), eine Grundierungsschicht (B), die auf der Substratschicht angeordnet ist, und eine heißsiegelfähige Beschichtungsschicht (C), die auf der Grundierungsschicht angeordnet ist, wobei

(i) die Substratschicht (A) eine mehrschichtige Folie ist, die eine Basisschicht ($A_1$) und eine Polymerschicht ($A_2$) umfasst, wobei die Basisschicht ($A_1$) und die Polymerschicht ($A_2$) unabhängig einen Polyester umfassen, der Monomereinheiten abgeleitet von einem oder mehreren Diolen, einer oder mehreren Dicarbonsäuren) und einem oder mehreren Poly(alkylenoxid)glycolen umfasst;
(ii) die Grundierungsschicht (B) einen vernetzten Sulfopolyester umfasst; und
(iii) die heißsiegelfähige Beschichtungsschicht (C) einen ersten Copolyester umfasst.

**2.** Folie nach Anspruch 1, wobei die heißsiegelfähige Beschichtungsschicht (C) einen zweiten Copolyester umfasst.

**3.** Folie nach einem der vorstehenden Ansprüche, wobei die Grundierungsschicht (B) von einer Zusammensetzung abgeleitet ist, die einen Sulfopolyester und ein Vernetzungsmittel umfasst.

**4.** Folie nach einem der vorstehenden Ansprüche, wobei der oder die Polyester der Substratschicht (A) eine aromatische Dicarbonsäure, vorzugsweise Terephthalsäure, Isophthalsäure, Phthalsäure und/oder 2,5-, 2,6- oder 2,7-Naphthalindicarbonsäure und vorzugsweise Terephthalsäure umfassen;
und/oder wobei der oder die Polyester der Substratschicht (A) ein aliphatisches Diol, vorzugsweise aliphatische Diole mit 2-8 Kohlenstoffatomen, vorzugsweise Ethylenglycol und 1,4-Butandiol, bevorzugter Ethylenglycol, umfassen.

**5.** Folie nach einem der Ansprüche 1 bis 4, wobei das Poly(alkylenoxid)glycol des oder der Copolyester der Substratschicht (A) ausgewählt ist aus Polyethylenglycol (PEG), Polypropylenglycol (PPG) und Poly(tetramethylenoxid) glycol (PTMO) und vorzugsweise aus Polyethylenglycol;
und/oder wobei das Poly(alkylenoxid)glycol des Copolyesters der Basisschicht ($A_1$) ein gewichtsgemitteltes Mole-

kulargewicht von 400 bis 10.000, vorzugsweise von 1000 bis 6000, vorzugsweise von 2000 bis 4500, vorzugsweise von 3000 bis 4000 und vorzugsweise von 3200 bis 3600 aufweist, wobei das gewichtsgemittelte Molekulargewicht nach dem in der Beschreibung bereitgestellten Verfahren geprüft wird.

**6.** Folie nach Anspruch 1 oder nach einem der Ansprüche 4 oder 5, wobei das Poly(alkylenoxid)glycol des Copolyesters der Polymerschicht ($A_2$) ein gewichtsgemitteltes Molekulargewicht von 200 bis 800, vorzugsweise von 250 bis 600, vorzugsweise von 300 bis 500, vorzugsweise von 350 bis 450 aufweist, wobei das gewichtsgemittelte Molekulargewicht nach dem in der Beschreibung bereitgestellten Verfahren geprüft wird.

**7.** Folie nach einem der Ansprüche 1 bis 6, wobei die Menge an Poly(alkylenoxid)glycol, die in dem oder den Copolyestern der Substratschicht (A) vorhanden ist, 5 bis 40 Gew.-%, vorzugsweise 5 bis 30 Gew.-%, vorzugsweise 10 bis 20 Gew.-% und vorzugsweise 10 bis 15 Gew.-%, bezogen auf das Gesamtgewicht des Copolyesters beträgt (d.h. Bezogen auf das Geamtgewicht des Copolyesters in der Basisschicht ($A_1$) bzw. in der Polymerschicht ($A_2$)).

**8.** Folie nach Anspruch 1 oder nach einem der Ansprüche 4 bis 7, wobei der Copolyester der Basisschicht ($A_1$) von dem Copolyester der Polymerschicht ($A_2$) verschieden ist.

**9.** Folie nach Anspruch 8, wobei:

(a) die Polymerschicht ($A_2$) einen Copolyester umfasst, der von einem aliphatischen Glycol, einer aromatischen Dicarbonsäure und einem Poly(alkylenoxid)glycol abgeleitet ist; wobei vorzugsweise das aliphatische Glycol Ethylenglycol ist, die erste aromatische Dicarbonsäure Terephthalsäure ist und das Poly(alkylenoxid)glycol Polyethylenglycol ist; oder
(b) die Polymerschicht ($A_2$) einen Copolyester umfasst, der von einem aliphatischen Glycol, einer aromatischen Dicarbonsäure und einer zweiten Dicarbonsäure abgeleitet ist; wobei vorzugsweise das aliphatische Glycol Ethylenglycol ist, die erste aromatische Dicarbonsäure Terephthalsäure ist und die zweite Dicarbonsäure Isophthalsäure ist;
vorzugsweise wobei die Menge der zweiten Dicarbonsäure, die in dem Copolyester der Polymerschicht ($A_2$) vorhanden ist, in dem Bereich von 5 bis 40 Gew.-%, vorzugsweise in dem Bereich von 10 bis 30 Gew.-% und vorzugsweise in dem Bereich von 15 bis 20 Gew.-%, bezogen auf das Gesamtgewicht des Copolyesters in Schicht ($A_2$), liegt; oder
(c) die Polymerschicht ($A_2$) einen Copolyester umfasst, der von einem aliphatischen Glycol, einer ersten aromatischen Dicarbonsäure, einer zweiten Dicarbonsäure und einem Poly(alkylenoxid)glycol abgeleitet ist; wobei vorzugsweise das aliphatische Glycol Ethylenglycol ist, die erste aromatische Dicarbonsäure Terephthalsäure ist, die zweite Dicarbonsäure Isophthalsäure ist und das Poly(alkylenoxid)glycol Polyethylenglycol ist;

vorzugsweise wobei die Menge der zweiten Dicarbonsäure, die in dem Copolyester der Polymerschicht ($A_2$) vorhanden ist, in dem Bereich von 5 bis 40 Gew.-%, vorzugsweise in dem Bereich von 10 bis 30 Gew.-% und vorzugsweise in dem Bereich von 15 bis 20 Gew.-%, bezogen auf das Gesamtgewicht des Copolyesters in Schicht ($A_2$), liegt.

**10.** Folie nach einem der vorstehenden Ansprüche, wobei:

(a) die inhärente Viskosität der Substratschicht (A) wenigstens 0,6 dl/g, vorzugsweise wenigstens 0,7 dl/g, vorzugsweise wenigstens 0,75 dl/g, vorzugsweise wenigstens 0,77 dl/g, beträgt, wobei die inhärente Viskosität nach dem in der Beschreibung bereitgestellten Verfahren geprüft wird; und/oder
(b) die Dicke der Substratschicht (A) von 0,1 bis 200 $\mu$m, vorzugsweise von 0,5 bis 100 $\mu$m, vorzugsweise von 12 bis 50 $\mu$m und vorzugsweise von 15 bis 30 $\mu$m, beträgt; und/oder
(c) das Vernetzungsmittel der Grundierungsschicht (B) ein wasserlösliches Vernetzungsmittel ist oder umfasst.

**11.** Folie nach einem der vorstehenden Ansprüche, wobei:

(a) das Vernetzungsmittel der Grundierungsschicht (B) ausgewählt ist aus einem Melamin, Isocyanat, Oxazolin, Aziridin, Carbodiimid, Epoxidharz, Silan und Vernetzungsmittel auf Zirkoniumbasis;
wobei das Vernetzungsmittel der Grundierungsschicht (B) vorzugsweise ein Melamin-Vernetzungsmittel ist; und/oder
(b) die Zusammensetzung, aus der die Grundierungsschicht (B) abgeleitet ist, in dem Bereich von 0,1 Gew.-% bis 3 Gew.-%, vorzugsweise von 0,2 Gew.-% bis 2 Gew.-%, vorzugsweise von 0,5 Gew.-% bis 1,5 Gew.-%, an dem

Vernetzungsmittel, bezogen auf das Gesamtgewicht der Zusammensetzung vor Trocknen, umfasst; und/oder
(c) der Sulfopolyester der Grundierungsschicht (B) Monomereinheiten abgeleitet von einem oder mehreren Diolen, einer oder mehreren Dicarbonsäuren und einem oder mehreren Sulfomonomeren umfasst, wobei das eine oder die mehreren Diole vorzugsweise wie in Anspruch 4 definiert sind und/oder wobei die eine oder die mehreren Dicarbonsäuren wie in Anspruch 4 definiert sind, wobei das Sulfomonomer vorzugsweise eine sulfonierte aromatische Dicarbonsäure ist, wobei das Sulfomonomer vorzugsweise ausgewählt ist aus 5-Natriumsulfoisophthalsäure und 4-Natriumsulfoisophthalsäure.

**12.** Folie nach einem der vorstehenden Ansprüche, wobei:

(a) die Zusammensetzung, aus der die Grundierungsschicht (B) abgeleitet ist, in dem Bereich von 0,5 Gew.-% bis 20 Gew.-%, vorzugsweise von 1 Gew.-% bis 15 Gew.-%, vorzugsweise von 2 Gew.-% bis 10 Gew.-%, vorzugsweise von 4 Gew.-% bis 8 Gew.-%, an dem Sulfopolyester, bezogen auf das Gesamtgewicht der Zusammensetzung vor Trocknen, umfasst; und/oder
(b) die Zusammensetzung, aus der die Grundierungsschicht (B) abgeleitet ist, einen Beschichtungsträger umfasst, wobei die Zusammensetzung vorzugsweise den Beschichtungsträger in einer solchen Menge umfasst, dass die Zusammensetzung einen Feststoffgehalt von 1 bis 15 %, vorzugsweise 3 % bis 12 %, vorzugsweise 4 bis 10 %, vorzugsweise 5 bis 8 %, vorzugsweise 6 bis 7 Gew.-%, bezogen auf das Gesamtgewicht der Zusammensetzung, aufweist; und/oder
(c) die Dicke der Grundierungsschicht (B) 5 bis 50 nm, vorzugsweise 10 bis 30 nm, vorzugsweise 15 bis 25 nm, beträgt.

**13.** Folie nach einem der vorstehenden Ansprüche, wobei:

(a) die heißsiegelfähige Beschichtungsschicht (C) abgeleitet ist von einer Zusammensetzung umfassend einen ersten Copolyester, der von einem aliphatischen Glycol abgeleitet ist, eine erste aromatische Dicarbonsäure und eine zweite aromatische Dicarbonsäure, wobei das aliphatische Glycol vorzugsweise 2-8 Kohlenstoffatome enthält und vorzugsweise Ethylenglycol ist, wobei die erste aromatische Dicarbonsäure vorzugsweise Terephthalsäure ist und wobei die zweite aromatische Dicarbonsäure vorzugsweise Azelainsäure ist;
wobei vorzugsweise das Molverhältnis der ersten Dicarbonsäure zu der zweiten Dicarbonsäure in dem ersten Copolyester in dem Bereich von 50:50 bis 90:10, vorzugsweise in dem Bereich von 52:48 bis 70:30, liegt und vorzugsweise 55:45 beträgt; und/oder
(b) die Zusammensetzung, aus der die heißsiegelfähige Beschichtungsschicht (C) abgeleitet ist, in dem Bereich von 1 Gew.-% bis 20 Gew.-%, vorzugsweise von 5 Gew.-% bis 18 Gew.-%, vorzugsweise von 10 Gew.-% bis 15 Gew.-% und vorzugsweise von 12 Gew.-% bis 14 Gew.-%, an dem ersten Copolyesters, bezogen auf das Gesamtgewicht der Zusammensetzung vor Trocknen, umfasst.

**14.** Folie nach einem der vorstehenden Ansprüche, wobei die heißsiegelfähige Beschichtungsschicht (C) einen zweiten Copolyester umfasst, der von einem aliphatischen Glycol, einer ersten aromatischen Dicarbonsäure und einer zweiten aliphatischen Dicarbonsäure abgeleitet ist, wobei das aliphatische Diol vorzugsweise 2-8 Kohlenstoffatome enthält und vorzugsweise Ethylenglycol ist, wobei die erste aromatische Dicarbonsäure vorzugsweise Terephthalsäure ist und wobei die zweite aliphatische Dicarbonsäure vorzugsweise Isophthalsäure ist.

**15.** Folie nach Anspruch 14, wobei:

(a) das Molverhältnis der ersten Dicarbonsäure zu der zweiten Dicarbonsäure in dem zweiten Copolyester in dem Bereich von 50:50 bis 90:10, vorzugsweise in dem Bereich von 55:45 bis 70:30, liegt und vorzugsweise 60:40 beträgt; und/oder
(b) die Zusammensetzung, aus der die heißsiegelfähige Beschichtungsschicht (C) abgeleitet ist, in dem Bereich von 0,1 Gew.-% bis 10 Gew.-%, vorzugsweise von 0,5 Gew.-% bis 8 Gew.-%, vorzugsweise von 1 Gew.-% bis 6 Gew.-%, vorzugsweise von 2 Gew.-% bis 5 Gew.-% und vorzugsweise von 3 Gew.-% bis 4 Gew.-% an dem zweiten Copolyester, bezogen auf das Gesamtgewicht der Zusammensetzung vor Trocknen, umfasst.

**16.** Folie nach einem der vorstehenden Ansprüche, wobei:

(a) die Zusammensetzung, aus der die heißsiegelfähige Beschichtungsschicht (C) abgeleitet ist, einen Beschichtungsträger umfasst, wobei die Zusammensetzung den Beschichtungsträger vorzugsweise in einer solchen Menge umfasst, dass die Zusammensetzung einen Feststoffgehalt von 5 % bis 30 %, vorzugsweise

8 % bis 25 %, vorzugsweise 10 % bis 20 % und vorzugsweise 15 % bis 19 Gew.-%, bezogen auf das Gesamtgewicht der Zusammensetzung, aufweist; und/oder
(b) die Dicke der heißsiegelfähigen Beschichtungsschicht (C) 2 bis 3,5 μm, vorzugsweise 2,4 bis 3 μm, vorzugsweise 2,6 bis 2,8 μm, beträgt; und/oder
(c) die Folie orientiert, vorzugsweise biaxial orientiert, ist.

**17.** Folie nach einem der vorstehenden Ansprüche, wobei:

(a) die Folie eine Trübung von weniger als 10 %, vorzugsweise weniger als 6 %, vorzugsweise weniger als 5 % und vorzugsweise weniger als 2 % aufweist, wobei die Trübung nach dem Standard ASTM D 1003 gemessen wird; und/oder
(b) die Folie eine Wasserdampfdurchlässigkeitsrate von wenigstens 80 g/m$^2$/Tag, vorzugsweise wenigstens 90 g/m$^2$/Tag, vorzugsweise wenigstens 100 g/m$^2$/Tag, vorzugsweise wenigstens 115 g/m$^2$/Tag, vorzugsweise wenigstens 130 g/m$^2$/Tag, vorzugsweise wenigstens 140 g/m$^2$/Tag und bevorzugter wenigstens 150 g/m$^2$/Tag aufweist, wobei die Wasserdampfdurchlässigkeitsrate nach dem in der Beschreibung bereitgestellten Verfahren geprüft wird.

**18.** Verfahren zur Herstellung einer Verbundfolie nach einem der Ansprüche 1 bis 17, wobei das Verfahren umfasst:

(i) Bereitstellen einer Substratschicht (A);
(ii) Anordnen einer Grundierungsschicht (B) in einem Beschichtungsträger auf einer Oberfläche der Substratschicht (A);
(iii) Trocknen und Erhitzen der Zusammensetzung der Grundierungsschicht (B), um eine gehärtete Grundierungsschicht (B) zu bilden;
(iv) Anordnen einer heißsiegelfähigen Beschichtungsschicht (C) in einem Beschichtungsträger auf einer Oberfläche der Grundierungsschicht (B);
(v) Trocknen der Zusammensetzung der heißsiegelfähigen Beschichtungsschicht;

gegebenenfalls wobei das Verfahren ferner den Schritt der Herstellung des Polyesters der Substratschicht (A) durch Festkörperpolymerisation umfasst.

**19.** Verwendung einer Verbundfolie nach einem der Ansprüche 1 bis 17 als atmungsaktive Folie bei der Verpackung von Schnittpflanzen, wobei die Folie vorzugsweise eine Deckelfolie in der Verpackung ist, wobei die Verpackung die Folie als Deckelfolie und einen Behälter umfasst;
vorzugsweise zum Zweck des Verbesserns der Atmungsaktivität der Verpackung und/oder zum Verlängern der Haltbarkeit der Schnittpflanzen.

**20.** Verfahren zum Verpacken von Schnittpflanzen, wobei das Verfahren den Schritt des Bereitstellens einer Folie nach einem der Ansprüche 1 bis 17 als wenigstens einen Teil der Verpackung umfasst.

**21.** Verschlossener Behälter, umfassend einen Behälter, der Schnittpflanzen enthält, und einen Deckel, der aus einer Folie nach einem der Ansprüche 1 bis 17 gebildet ist.

**22.** Verpacktes, versiegeltes Produkt umfassend Schnittpflanzen, wobei die Verpackung, die die Abdichtung um das Lebensmittelprodukt bewirkt und bildet, eine Verbundfolie nach einem der Ansprüche 1 bis 17 ist, die mit sich selbst heißgesiegelt ist.

## Revendications

**1.** Film composite respirant, thermoscellable, comprenant une couche de substrat (A), une couche de revêtement d'apprêt (B) disposée sur la couche de substrat, et une couche de revêtement thermoscellable (C) disposée sur la couche de revêtement d'apprêt, dans lequel

(i) la couche de substrat (A) est un film multicouche comprenant une couche de base ($A_1$) et une couche polymérique ($A_2$), la couche de base ($A_1$) et la couche polymérique ($A_2$) comprenant indépendamment un polyester comprenant des motifs monomériques dérivés d'un ou plusieurs diol(s), d'un ou plusieurs acide(s) dicarboxylique(s) et d'un ou plusieurs poly(oxyde d'alkylène) glycol(s) ;

(ii) la couche de revêtement d'apprêt (B) comprend un sulfopolyester réticulé ; et
(iii) la couche de revêtement thermoscellable (C) comprend un premier copolyester.

**2.** Film selon la revendication 1, dans lequel la couche de revêtement thermoscellable (C) comprend un second copolyester.

**3.** Film selon l'une quelconque des revendications précédentes, dans lequel la couche de revêtement d'apprêt (B) est dérivée d'une composition comprenant un sulfopolyester et un agent de réticulation.

**4.** Film selon l'une quelconque des revendications précédentes, dans lequel le(s) polyester(s) de la couche de substrat (A) comprend un acide dicarboxylique aromatique, de préférence l'acide téréphtalique, l'acide isophtalique, l'acide phtalique et/ou l'acide 2,5-, 2,6- ou 2,7-naphtalènedicarboxylique, et de préférence l'acide téréphtalique ;
et/ou dans lequel le ou les polyester(s) de couche de substrat (A) comprend un diol aliphatique, de préférence des diols aliphatiques contenant 2 à 8 atomes de carbone, de préférence l'éthylène glycol et le 1,4-butanediol, plus préférablement l'éthylène glycol.

**5.** Film selon l'une quelconque des revendications 1 à 4, dans lequel le poly(oxyde d'alkylène)glycol du(des) copolyester(s) de la couche de substrat (A) est choisi parmi un polyéthylène glycol (PEG), un polypropylène glycol (PPG) et un poly(oxyde de tétraméthylène) glycol (PTMO), et de préférence parmi un polyéthylène glycol ; et/ou dans lequel le poly(oxyde d'alkylène)glycol du copolyester de la couche de base ($A_1$) a un poids moléculaire moyen en poids de 400 à 10 000, de préférence de 1 000 à 6 000, de préférence de 2 000 à 4 500, de préférence de 3 000 à 4 000, et de préférence de 3 200 à 3 600, dans lequel le poids moléculaire moyen en poids est testé selon le procédé décrit dans la description.

**6.** Film selon la revendication 1, ou selon l'une quelconque des revendications 4 ou 5, dans lequel le poly(oxyde d'alkylène)glycol du copolyester de la couche polymérique ($A_2$) a un poids moléculaire moyen en poids de 200 à 800, de préférence de 250 à 600, de préférence de 300 à 500, de préférence de 350 à 450, dans lequel le poids moléculaire moyen en poids est testé selon le procédé fourni dans la description.

**7.** Film selon l'une quelconque des revendications 1 à 6, dans lequel la quantité de poly(oxyde d'alkylène)glycol présente dans le(s) copolyester(s) de la couche de substrat (A) est de 5 à 40 % en poids, de préférence de 5 à 30 % en poids, de préférence de 10 à 20 % en poids, et de préférence de 10 à 15 % en poids, par rapport au poids total dudit copolyester (c'est-à-dire par rapport au poids total de copolyester dans la couche de base [$A_1$] ou dans la couche polymérique [$A_2$] respectivement).

**8.** Film selon la revendication 1 ou selon l'une quelconque des revendications 4 à 7, dans lequel le copolyester de la couche de base ($A_1$) est différent du copolyester de la couche polymérique ($A_2$).

**9.** Film selon la revendication 8 dans lequel :

(a) la couche polymérique ($A_2$) comprend un copolyester dérivé d'un glycol aliphatique, d'un acide dicarboxylique aromatique et d'un poly(oxyde d'alkylène) glycol ; de préférence, dans lequel ledit glycol aliphatique est l'éthylèneglycol, ledit premier acide dicarboxylique aromatique est l'acide téréphtalique et ledit poly(oxyde d'alkylène) glycol est un polyéthylène glycol ; ou
(b) la couche polymérique ($A_2$) comprend un copolyester dérivé d'un glycol aliphatique, d'un acide dicarboxylique aromatique et d'un second acide dicarboxylique ; de préférence, dans lequel ledit glycol aliphatique est l'éthylène glycol, ledit premier acide dicarboxylique aromatique est l'acide téréphtalique et ledit second acide dicarboxylique est l'acide isophtalique ;
de préférence dans lequel, la quantité du second acide dicarboxylique présent dans le copolyester de la couche polymérique ($A_2$) se situe dans la plage de 5 à 40 % en poids, de préférence dans la plage de 10 à 30 % en poids, et de préférence dans la plage de 15 à 20 % en poids, par rapport au poids total du copolyester dans la couche ($A_2$) ; ou
(c) une couche polymérique ($A_2$) comprend un copolyester dérivé d'un glycol aliphatique, d'un premier acide dicarboxylique aromatique, d'un second acide dicarboxylique et d'un poly(oxyde d'alkylène) glycol ; de préférence dans lequel ledit glycol aliphatique est l'éthylène glycol, ledit premier acide dicarboxylique aromatique est l'acide téréphtalique, ledit second acide dicarboxylique est l'acide isophtalique et ledit poly(oxyde d'alkylène) glycol est un polyéthylène glycol ;

de préférence, la quantité du second acide dicarboxylique présent dans le copolyester de la couche polymérique ($A_2$) est comprise entre 5 et 40 % en poids, de préférence entre 10 et 30 % en poids, et de préférence entre 15 et 20 % en poids, par rapport au poids total du copolyester dans la couche ($A_2$).

**10.** Film selon une quelconque revendication précédente dans lequel :

(a) la viscosité inhérente de la couche de substrat (A) est d'au moins 0,6 dL/g, de préférence d'au moins 0,7 dL/g, de préférence d'au moins 0,75 dL/g, de préférence d'au moins 0,77 dL/g, la viscosité inhérente étant testée selon le procédé fourni dans la description ; et/ou
(b) l'épaisseur de la couche de substrat (A) est de 0,1 à 200 μm, de préférence de 0,5 à 100 μm, de préférence de 12 à 50 μm, et de préférence de 15 à 30 μm ; et/ou
(c) l'agent de réticulation de la couche de revêtement d'apprêt (B) est ou comprend un agent de réticulation hydrosoluble.

**11.** Film selon une quelconque revendication précédente dans lequel :

(a) l'agent de réticulation de la couche de revêtement d'apprêt (B) est choisi parmi un agent de réticulation à base de mélamine, d'isocyanate, d'oxazoline, d'aziridine, de carbodiimide, de résine époxy, de silane et de zirconium ; de préférence dans laquelle l'agent de réticulation de la couche de revêtement d'apprêt (B) est un agent de réticulation de mélamine ; et/ou
(b) la composition dont est issue la couche de revêtement d'apprêt (B) comprend dans la plage de 0,1 à 3 % en poids, de préférence de 0,2 à 2 %, de préférence de 0,5 à 1,5 % en poids de l'agent de réticulation par rapport au poids total de la composition avant séchage ; et/ou
(c) le sulfopolyester de la couche de revêtement d'apprêt (B) comprend des motifs monomériques dérivés d'un ou plusieurs diol(s), d'un ou plusieurs acide(s) dicarboxylique(s) et d'un ou plusieurs sulfomonomères, de préférence dans lequel le ou les diol(s) sont tels que définis dans la revendication 4 et/ou dans lequel le ou les acide(s) dicarboxylique(s) sont tels que définis dans la revendication 4, de préférence dans lequel le sulfomonomère est un acide dicarboxylique aromatique sulfoné, de préférence dans lequel le sulfomonomère est choisi parmi l'acide 5-sulfo-isophtalique de sodium et l'acide 4-sulfo-isophtalique de sodium.

**12.** Film selon une quelconque revendication précédente dans lequel :

(a) la composition dont est issue la couche de revêtement d'apprêt (B) comprend dans la plage de 0,5 à 20 % en poids, de préférence de 1 à 15 %, de préférence de 2 à 10 %, de préférence de 4 à 8 % en poids du sulfopolyester sur la base du poids total de la composition avant séchage ; et/ou
(b) la composition dont est issue la couche de revêtement d'apprêt (B) comprend un véhicule de revêtement, de préférence dans lequel la composition comprend le véhicule de revêtement en une quantité telle que la composition a une teneur en solides de 1 à 15 %, de préférence de 3 à 12 %, de préférence de 4 à 10 %, de préférence de 5 à 8 %, de préférence de 6 à 7 % en poids par rapport au poids total de la composition ; et/ou
(c) l'épaisseur de la couche de revêtement d'apprêt (B) est de 5 à 50 nm, de préférence de 10 à 30 nm, de préférence de 15 à 25 nm.

**13.** Film selon une quelconque revendication précédente dans lequel :

(a) la couche de revêtement thermoscellable (C) est issue d'une composition comprenant un premier copolyester dérivé d'un glycol aliphatique, d'un premier acide dicarboxylique aromatique et d'un second acide dicarboxylique aromatique, de préférence où le glycol aliphatique contient 2 à 8 atomes de carbone et est de préférence de l'éthylène glycol, de préférence où le premier acide dicarboxylique aromatique est l'acide téréphtalique, et de préférence dans lequel le second acide dicarboxylique aromatique est l'acide azélaïque ; de préférence, dans lequel le rapport molaire du premier acide dicarboxylique sur le deuxième acide dicarboxylique dans le premier copolyester est dans la plage de 50:50 à 90:10, de préférence dans la plage de 52:48 à 70:30, et est de préférence de 55:45 ; et/ou
(b) la composition dont est issue la couche de revêtement thermoscellable (C) comprend dans la plage de 1 à 20 % en poids, de préférence de 5 à 18 % en poids, de préférence de 10 à 15 % en poids, et de préférence de 12 à 14 % en poids du premier copolyester sur la base du poids total de la composition avant séchage.

**14.** Film selon l'une quelconque des revendications précédentes, dans lequel la couche de revêtement thermoscellable (C) comprend un second copolyester dérivé d'un glycol aliphatique, d'un premier acide dicarboxylique aromatique et

d'un second acide dicarboxylique aliphatique, de préférence dans lequel le diol aliphatique contient 2 à 8 atomes de carbone et est de préférence l'éthylèneglycol, de préférence dans lequel le premier acide dicarboxylique aromatique est l'acide téréphtalique, et de préférence dans lequel le second acide dicarboxylique aliphatique est l'acide isophtalique.

**15.** Film selon la revendication 14 dans lequel :

(a) le rapport molaire du premier acide dicarboxylique sur le deuxième acide dicarboxylique dans le deuxième copolyester est dans la plage de 50:50 à 90:10, de préférence dans la plage de 55:45 à 70:30, et est de préférence de 60:40 ; et/ou
(b) la composition dont est issue la couche de revêtement thermoscellable (C) comprend dans la plage de 0,1 % à 10 % en poids, de préférence de 0,5 % à 8 % en poids, de préférence de 1 % à 6 % en poids, de préférence de 2 % à 5 % en poids, et de préférence de 3 % à 4 % en poids du second copolyester sur la base du poids total de la composition avant séchage.

**16.** Film selon une quelconque revendication précédente dans lequel :

(a) la composition dont est issue la couche de revêtement thermoscellable (C) comprend un véhicule de revêtement, de préférence la composition comprenant le véhicule de revêtement en une quantité telle que la composition a une teneur en solides de 5 à 30 %, de préférence de 8 à 25 %, de préférence de 10 à 20 %, et de préférence de 15 à 19 % en poids par rapport au poids total de la composition ; et/ou
(b) l'épaisseur de la couche de revêtement thermoscellable (C) est de 2 à 3,5 $\mu$m, de préférence de 2,4 à 3 $\mu$m, de préférence de 2,6 à 2,8 $\mu$m ; et/ou
(c) le film est orienté, de préférence orienté de manière biaxiale.

**17.** Film selon une quelconque revendication précédente dans lequel :

(a) le film présente un voile inférieur à 10 %, de préférence inférieur à 6 %, de préférence inférieur à 5 % et de préférence inférieur à 2 %, dans lequel le voile est mesuré selon la norme ASTM D 1003 ; et/ou
(b) le film présente une vitesse de transmission de vapeur d'eau d'au moins 80 g/$m^2$/jour, de préférence au moins 90 g/$m^2$/jour, de préférence au moins 100 g/$m^2$/jour, de préférence au moins 115 g/$m^2$/jour, de préférence au moins 130 g/$m^2$/jour, de préférence au moins 140 g/$m^2$/jour, et plus préférablement au moins 150 g/$m^2$/jour, la vitesse de transmission de vapeur d'eau étant testée selon le procédé fourni dans la description.

**18.** Procédé de fabrication d'un film composite selon l'une quelconque des revendications 1 à 17, le procédé comprenant :

(i) la fourniture d'une couche de substrat (A) ;
(ii) le dépôt d'une couche de revêtement d'apprêt (B) dans un véhicule de revêtement sur une surface de la couche de substrat (A) ;
(iii) le séchage et chauffage de la composition de la couche de revêtement d'apprêt (B) pour former une couche d'apprêt durcie (B) ;
(iv) le dépôt d'une couche de revêtement thermoscellable (C) dans un véhicule de revêtement sur une surface de la couche de revêtement d'apprêt (B) ;
(v) le séchage de la composition de couche de revêtement thermoscellable ;

éventuellement, dans lequel le procédé comprend en outre l'étape de préparation du polyester de la couche de substrat (A) par polymérisation à l'état solide.

**19.** Utilisation d'un film composite selon l'une quelconque des revendications 1 à 17 en tant que film respirant dans l'emballage de plantes coupées, de préférence dans laquelle ledit film est un film d'operculage dans ledit emballage, ledit emballage comprenant ledit film en tant que film d'operculage et un réceptacle ;
de préférence dans le but d'améliorer la respirabilité dudit emballage et/ou prolonger la durée de conservation desdites plantes coupées.

**20.** Procédé d'emballage de plantes coupées, ledit procédé comprenant l'étape de fourniture d'un film selon l'une quelconque des revendications 1 à 17 en tant qu'au moins une partie dudit emballage.

**21.** Récipient scellé comprenant un réceptacle contenant des plantes coupées, et un couvercle formé à partir d'un film

selon l’une quelconque des revendications 1 à 17.

**22.** Produit scellé emballé comprenant des plantes coupées, dans lequel l’emballage qui réalise et forme le scellement autour du produit alimentaire est un film composite selon l’une quelconque des revendications 1 à 17 qui est thermoscellé sur lui-même.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0192000 A
- GB 2355956 A
- EP 0358461 A
- EP 0178218 A
- US 20020187694 A
- JP 6219465 A
- JP 6165636 A
- JP 54117582 A
- GB 2004003119 W
- WO 2006075151 A1
- WO 2008053205 A1
- US 4476189 A
- WO 2009123921 A1
- WO 2009127842 A1
- WO 0138448 A1
- WO 2019207314 A1
- EP 0419400 A
- WO 2018206927 A
- GB 838708 A


### Non-patent literature cited in the description


- **P.M.A. TOIVONEN**. Non-ethylene, non-respiratory volatiles in harvested fruits and vegetables; their occurrence, biological activity and control. *Postharvest Biology and Technology*, 1997, vol. 12, 109-125